(19) Europäisches Patentamt
European Patent Office
Office européen des brevets

(11) EP 0 577 479 B1

(12) **FASCICULE DE BREVET EUROPEEN**

(45) Date de publication et mention
de la délivrance du brevet:
**04.11.1998 Bulletin 1998/45**

(51) Int Cl.6: **G01S 13/78**

(21) Numéro de dépôt: **93401636.1**

(22) Date de dépôt: **25.06.1993**

(54) **Procédé et dispositif d'amélioration de la probabilité de validité des codes des réponses de radar secondaire**

Verfahren und Anordnung zur Vergrösserung der Wahrscheinlichkeit der Feststellung der Gültigkeit der Antwortkodes beim Sekundärradar

Method and device for increasing the probability of validity detection of the reply codes in secondary radar systems

(84) Etats contractants désignés:
**DE FR GB IT**

(30) Priorité: **30.06.1992 FR 9208026**

(43) Date de publication de la demande:
**05.01.1994 Bulletin 1994/01**

(73) Titulaire: **THOMSON-CSF**
**75008 Paris (FR)**

(72) Inventeurs:
• **Barbier, Daniel**
**F-92402 Courbevoie Cedex (FR)**
• **Billaud, Philippe**
**F-92402 Courbevoie Cedex (FR)**
• **de Volder, Claude**
**F-92402 Courbevoie Cedex (FR)**

• **Parissenti, Jean-Paul**
**F-92402 Courbevoie Cedex (FR)**

(74) Mandataire: **Benoit, Monique et al**
**Thomson-CSF Propriété Intellectuelle,**
**13, Avenue du Président Salvador Allende**
**94117 Arcueil Cédex (FR)**

(56) Documents cités:
**EP-A- 0 055 151      DE-B- 2 728 100**
**US-A- 4 945 550**

• **ELECTRONICS & COMMUNICATION**
**ENGINEERING JOURNAL vol. 2, no. 2, Avril 1990,**
**LONDON pages 53 - 59 TRIM 'Mode S: An**
**Introduction and Overview'**

## Description

La présente invention se situe dans le domaine des récepteurs secondaires de radar.

On sait que les radars peuvent être munis d'un dispositif appelé radar secondaire permettant d'obtenir de véhicules porteurs coopératifs, équipés de transpondeurs radars, des informations codées sur l'identité du porteur et d'autres informations codées (altitude, signalisation de pannes radios, détresse...).

Les transpondeurs des véhicules porteurs émettent des réponses chaque fois qu'ils sont interrogés, et parfois, dans un mode de fonctionnement à adressage sélectif utilisable aussi à des fonctions d'anticollision dit mode S, de façon spontanée. Chaque radar équipé d'un radar secondaire doit donc être doté de moyens lui permettant de reconnaître parmi toutes les réponses reçues celles qui sont des réponses à ses propres interrogations, et les ayant détectées doit décrypter et valider le code de la réponse.

Le document DE-B-27 28 100 décrit un dispositif permettant à un radar secondaire de reconnaître les réponses à ses interrogations.

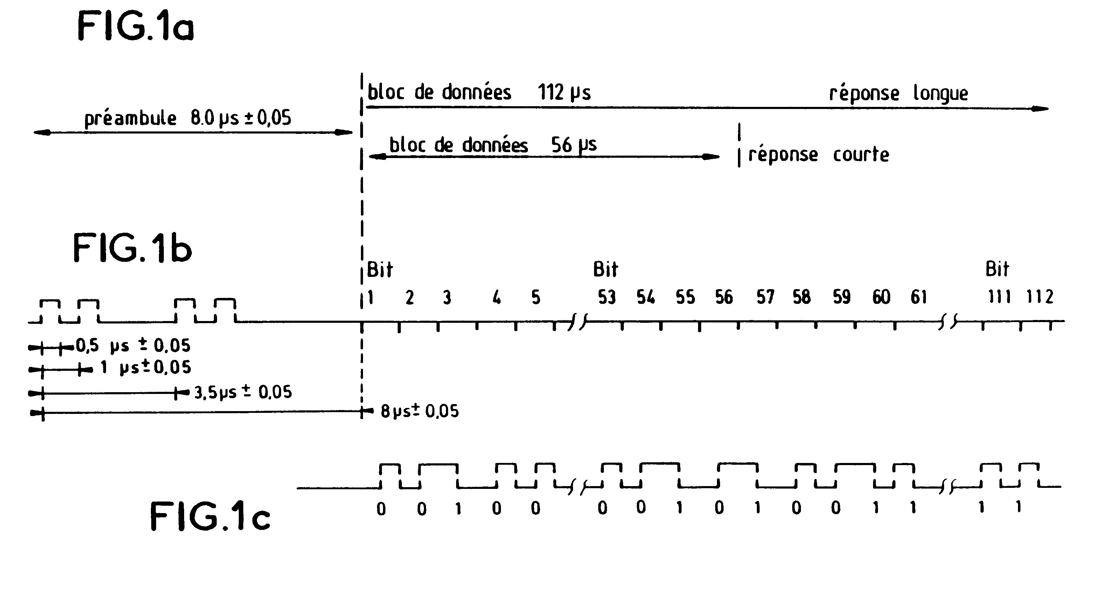

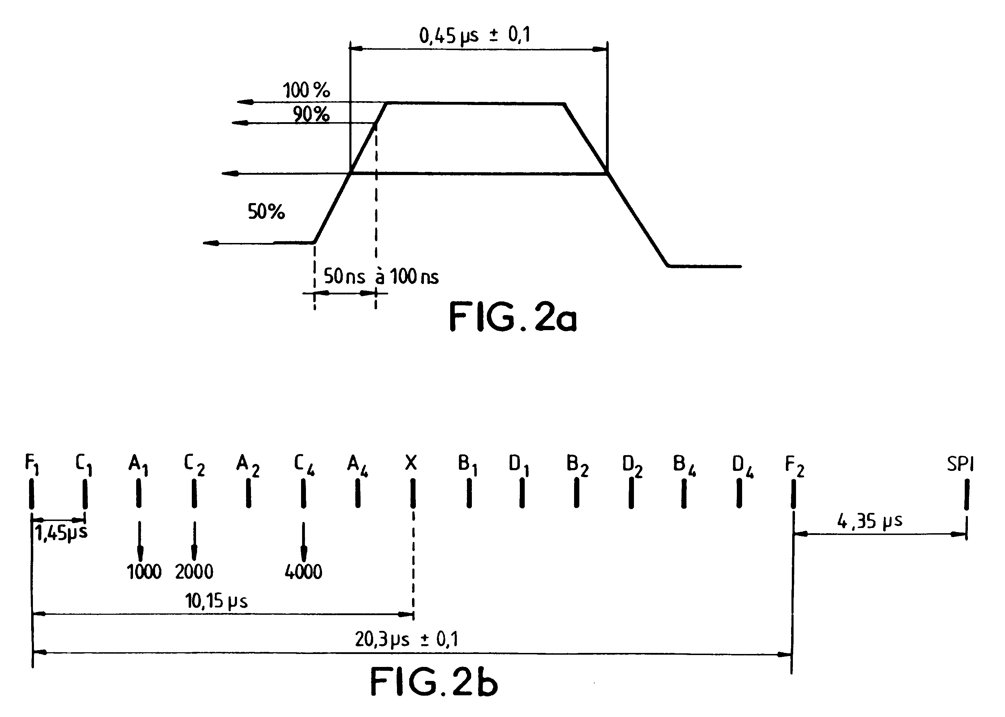

La normalisation internationale des réponses mode S et secondaire est donnée ci-après pour faciliter la compréhension de l'invention en référence aux figures 1 et 2.

De façon normalisée par l'Organisation de l'Aviation civile Internationale (OACI) une réponse mode S est constituée d'un train d'impulsions émises sur une fréquence porteuse de 1090 MHz.

Chaque train d'impulsions comporte un préambule et un message.

Le préambule comporte quatre impulsions identiques d'une durée de 0,5 µs chacune. Les deux premières et les deux dernières impulsions sont séparées entre elles de 0,5 µs. La première et la troisième impulsion sont séparées entre elles de 3,5 µs.

Le message ou bloc de données peut être court ou long. Lorsqu'il est court le message comporte 56 impulsions de 0,5 µs chacune, et 112 lorsqu'il est long. La modulation du message est effectuée par la position des impulsions qui peuvent être en début où en fin de créneaux de 1 µs.

Le premier de ces créneaux est situé à 8 µs derrière la première impulsion du préambule.

La définition de la norme est schématisée figure 1. Cette figure fait également apparaître les tolérances telles que définies par l'OACI.

Elle se décompose en trois figures, les figures 1a, 1b et 1c.

La figure 1a, représente la forme générale que prend une réponse mode S. Elle se décompose en un même préambule de 8 µs plus ou moins 0,05 µs, et en un bloc de données qui peut être soit un bloc de données court de 56 µs ou un bloc de données long de 112 µs.

La figure 1b, représente le préambule d'une part, et les bits de données du bloc réponse d'autre part. Le préambule comporte quatre impulsions, deux premières et deux secondes ; les deux premières impulsions ont une largeur de 0,5 µs ± 0,05 µs et elles sont espacées entre elles de 0,5 µs ; à 3,5 µs ± 0,05 µs de la première impulsion du premier bloc de deux impulsions se trouve un second bloc de deux impulsions identique au précédent. A 8 µs du front montant de la première impulsion du premier bloc viennent ensuite les bits de données du bloc de données. Ces bits sont au nombre de 56 ou de 112 selon que la réponse est courte ou longue.

La figure 1c, fait apparaître le mode de codage des bits de données appartenant au bloc réponse. Ces bits de données sont constitués par des impulsions qui se situent chacune dans un intervalle de 1 µs. Chaque impulsion a une largeur de 0,5 µs ; elle est placée soit en tête de l'intervalle d'1 µs soit en fin de cet intervalle. Si elle est placée en tête, de façon conventionnelle l'impulsion représente un 1, elle représente un zéro dans le cas contraire. Ainsi une impulsion représentant un zéro suivie d'une impulsion représentant un 1, sera constituée d'une seule impulsion de 1 µs, alors qu'une impulsion représentant un 1 suivie d'une impulsion représentant un zéro se traduira par une absence de signal pendant 1 µs.

Une réponse secondaire est formée d'un train d'impulsions. Chaque impulsion représentée figure 2a comporte un front montant tel que en 50 ns un niveau de puissance représentant 90% du niveau maximum est atteint. Elle comporte un palier de puissance et un bord de décroissance. L'écart de temps entre les point du front montant et le bord descendant ayant un niveau de puissance égal à 50% de la puissance maximum de l'impulsion est de 0,45 µs ± 0,1 µs. Le train d'impulsions représenté figure 2b est encadré par une première impulsion dite $F_1$ et une dernière impulsion dite $F_2$. Ces impulsions d'encadrement sont toujours présentes. A des intervalles de temps multiples de 1,45 µs derrière $F_1$ sont ou ne sont pas présentes 13 impulsions. La présence ou l'absence de ces impulsions permet la transmission d'une identité ou d'une altitude. Les noms conventionnels des différentes impulsions figurent sur la figure 2b. Dans certains cas le train d'impulsions comporte une impulsion supplémentaire dite SPI située 4,35 µs derrière $F_2$, soit à 24,65 µs ± 0,2 µs de $F_1$.

La présence ou l'absence d'une réponse de radar secondaire est détecté par la présence ou l'absence de la paire d'impulsions d'encadrement $F_1$ et $F_2$.

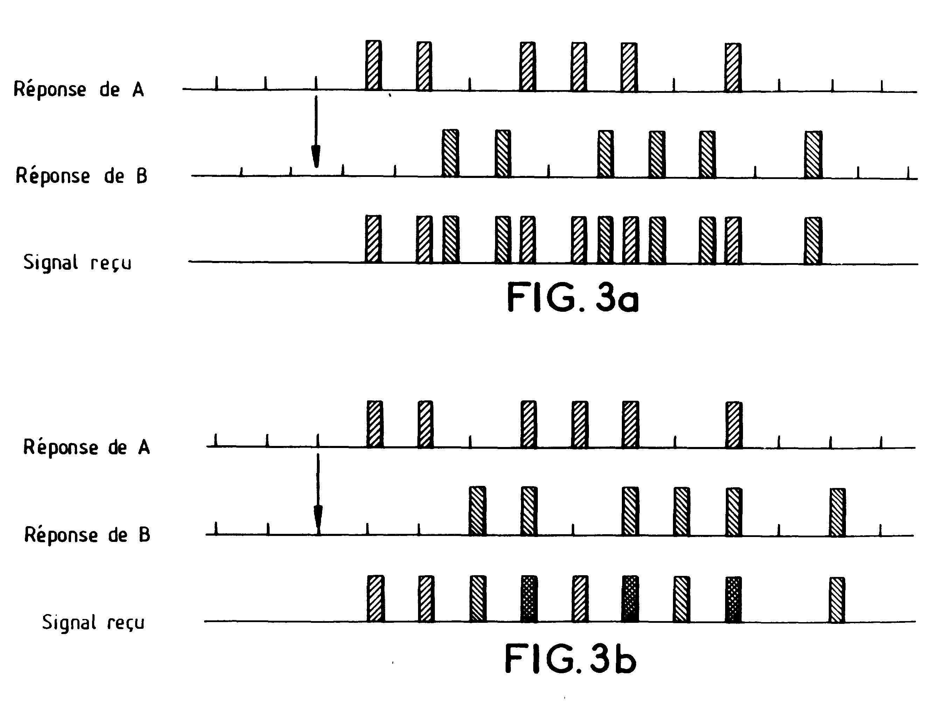

Chaque réponse occupe donc une période de 20,3 µs et une période additionnelle de 4,35 µs peut être nécessaire pour la transmission de l'impulsion spéciale de position SPI. A la vitesse de propagation des ondes, la période totale de 24,65 µs correspond à une distance d'environ deux milles nautiques. Si deux avions sont simultanément dans le lobe principal de l'antenne à des distances radiales inférieures à deux milles les impulsions des messages transmis par chacun des avions vont arriver au moins pour une partie d'entre elles dans le même intervalle de temps. L'utilisation d'une voie dite somme et d'une voie dite différence permet d'élaborer un signal, appelé conventionnellement Δ/Σ, représentatif de l'écart angulaire d'un signal reçu par rapport à la direction de l'axe du lobe principal de l'antenne du récepteur secondaire. L'utilisation de ce signal permet dans une certaine mesure de séparer les réponses de deux avions suffisamment éloignés en azimut. Il est cependant fréquent que des avions volants à des altitudes différentes aient des écarts de distances radiales au récepteur inférieurs à deux milles. La coïncidence partielle des réponses dans le temps peut alors venir fausser le décodage du message transmis. Deux cas de mélanges sont à distinguer. Ces cas sont représentés figure 3.

Sur les figures 3a et 3b, on a représenté un premier train d'impulsions en provenance d'un transpondeur A et un second train d'impulsions en provenance d'un porteur B. Le train d'impulsions apparent reçu par le récepteur est composé des impulsions de A et de B.

Sur la figure 3a, les impulsions en provenance de A et B sont séparables , il y a "garbling" de réponses mais non d'impulsions. Dans ce cas les dispositifs connus permettent de séparer les deux réponses et de reconstituer correctement les distances et les codes.

Sur la figure 3b, les impulsions en provenance de A et de B ne sont pas au moins pour certaines d'entre elles séparables, car la fin d'une impulsion par exemple de A se produit alors qu'une impulsion en provenance de B est commencée mais non terminée, Il y a "garbling" d'impulsions. Dans ce cas les deux réponses ne sont plus séparables et dans les systèmes connus les réponses correspondantes de A et de B sont polluées (code faux) ou l'une d'elles n'est pas détectée.

Dans un récepteur classique de radar secondaire un dispositif dit extracteur crée à partir des signaux reçus par les antennes et transmis sur des voies somme et différence des signaux vidéo-analogiques et des signaux vidéo-numériques. Les signaux analogiques sont connus sous les noms de LogΣ et Δ/Σ . Le signal Δ/Σ est comme expliqué plus haut représentatif d'un écart angulaire entre l'origine de la réponse et l'axe radioélectrique de l'antenne. Le signal LogΣ est une grandeur proportionnelle au logarithme de la puissance du signal reçu.

Les signaux vidéo-numériques sont connus sous les noms de Q Σ et QRSLS. Le signal QRSLS permet d'indiquer qu'un signal est en provenance d'une direction correspondant à un lobe secondaire de l'antenne. Il permet donc l'élimination de tels signaux. Le signal QΣ est un signal numérique qui peut prendre les valeurs 0 ou 1. Pour que ce signal ait la valeur 1, il faut d'une part qu'il existe un signal détecté par le récepteur c'est-à-dire au-dessus du seuil de détection et que d'autre part la valeur de ce signal soit moins de six décibels inférieure à la valeur maximum du signal. Comme expliqué plus haut la durée d'une impulsion est mesurée au niveau de sa puissance moitié, soit six décibels en dessous du niveau maximum. La durée pendant laquelle le signal QΣ a la valeur 1 correspond donc normalement à la durée d'une impulsion. Dans les récepteurs connus la durée des impulsions est mesurée par le temps pendant lequel le signal QΣ a la valeur 1. En cas de "garbling" d'impulsions la détection de "garbling" est assurée par le fait que la durée apparente d'une impulsion est supérieure ou non à un certain seuil.

On comprend dans ces conditions que la détection d'un "garbling" d'impulsions ne peut se faire que si l'impulsion garblée a une longueur supérieure à la durée d'une impulsion au maximum de la tolérance augmentée des incertitudes introduites dans les dispositifs de traitement. Il s'ensuit que les dispositifs connus ont un trou de détection pour les impulsions garblées dont la longueur apparente n'excède par la durée ainsi comptée.

Il convient de noter qu'en plus de ce trou d'information, les dispositifs actuels lorsqu'ils détectent l'information de garbling, se contentent de détruire l'information garblée ce qui correspond à une perte d'information.

La présente invention a pour but d'améliorer la probabilité de détection des réponses secondaires non seulement en cas de garbling mais aussi en cas de réponse à faible rapport signal/bruit. Elle a également pour but d'améliorer la validité des codes détectés.

L'invention consiste à cette fin en un traitement numérique de l'ensemble des signaux actuellement disponibles au niveau d'un récepteur secondaire.

Dans une version améliorée il est introduit un signal supplémentaire dit fréquence Σ obtenu à partir d'une analyse fréquentielle du signal reçu. Une telle analyse est possible bien que tous les transpondeurs soient censés émettre à la fréquence de 1090 MHz car d'une part il y a une tolérance sur la fréquence et que d'autre part l'expérience montre qu'un nombre non négligeable de transpondeurs émettent en dehors de la plage de tolérances fixées par l'OACI. Le signal fréquence Σ est un signal représentatif de la fréquence du signal reçu.

Pour réaliser le but ci-dessus défini le procédé selon l'invention consiste en un prétraitement suivi d'un traitement des différents signaux disponibles au niveau du récepteur.

Le traitement initial consiste en un procédé de prétraitement en temps réel de signaux émis par un transpondeur radar selon la revendication 1.

Le prétraitement consiste à définir un message dit message d'échantillon qui sera représentatif d'informations Sur un échantillon d'une grandeur, cet échantillon étant comparé à l'échantillon précédent.

On sait que pour traiter numériquement une information en temps réel, on prélève à une cadence dite d'échantillonnage des échantillons de la grandeur à traiter. Chaque échantillon a une valeur exprimée sur un nombre plus ou moins grand de bits. Un échantillon représente la valeur instantanée de la grandeur traitée au moment du prélèvement. Les convertisseurs qui effectuent la conversion d'un signal analogique en signal numérique effectuent leur prélèvement à une cadence régulière grâce à un signal d'horloge qui leur est fourni par ailleurs.

Dans la présente invention le message est dit d'échantillon, bien qu'il s'agisse d'un message relatif à plusieurs grandeurs et différents paramètres car il est transmis sur les voies parallèles d'un même bus de donnée et qu'il s'agit d'un message qui est renouvelé à la même cadence que la cadence d'échantillonnage. Il s'agit aussi d'un message d'échantillon en ce sens que la cadence d'échantillonnage de chacune des grandeurs traitées est réglée par un même signal d'horloge. C'est le même signal d'horloge qui règle non seulement la prise d'échantillon des convertisseurs mais aussi chacune des opérations élémentaires de traitement.

Les grandeurs non traitées ou traitées avec un nombre d'opérations moins grand que d'autres et qui figurent dans le message d'échantillon sont retardées en tant que de besoin pour que toutes les valeurs, et corrélations entre les valeurs transmises par un message d'échantillon soient des valeurs qui correspondent à un même instant de prélèvement. Le résultat du prétraitement des échantillons prélevés à un même moment sur les différentes grandeurs traitées est donc le message d'échantillon. Ce message sera décrit en détail plus loin. Il peut comporter la valeur des différentes grandeurs traitées, des indications sur le sens de variation d'une ou plusieurs grandeurs obtenues par comparaison avec l'échantillon précédent de la même grandeur, enfin et surtout des informations sur la position d'un front montant d'impulsion ou sur ce qui semble après ce prétraitement être la position d'un front montant d'impulsion.

La présence d'une valeur 1 sur une ou plusieurs voies dédiées du bus transmettant le message d'échantillon sera représentative d'un front montant d'impulsion ou de la présence supposée d'un front montant d'impulsions.

Le traitement proprement dit consistera dans un premier temps à établir les paramètres caractérisant chacune des impulsions détectées, le début de l'impulsion étant signalé dans le message d'échantillon par la présence d'une valeur 1 sur la voie du bus dédiée aux fronts montants d'impulsions. Cette première phase du traitement proprement dit consiste à construire à partir de plusieurs messages d'échantillon un message dit d'impulsion.

La deuxième phase du traitement consiste, en ce qui concerne l'invention, à utiliser les messages d'impulsion pour vérifier qu'un groupe d'impulsions attribué provisoirement en raison de leurs positions à une même réponse, a une probabilité raisonnable d'appartenir effectivement à cette réponse. L'examen sera effectué pour chacune des impulsions à l'aide des informations contenues dans le message d'impulsion. L'examen consiste à vérifier que chacune des impulsions, attribuées sur la base de sa situation dans le temps à une réponse, est définie par des paramètres dont la valeur est voisine d'une valeur moyenne établie pour la réponse. Cet examen d'homogénéifié des valeurs de paramètres des impulsions attribuées à une réponse sera effectué sur les grandeurs $\mathrm{Log}\Sigma$; $\Delta/\Sigma$ et le cas échéant sur fréquence$\Sigma$.

Un mode détaillé de réalisation du procédé selon l'invention et un mode de réalisation d'un dispositif destiné à réaliser le procédé selon l'invention seront maintenant décrits en références aux dessins annexés. Dans ces dessins :

- les figures 1 à 3, illustrent les données connues nécessaires à la compréhension du problème technique ;
- les figures 1 et 2, sont des schémas montrant la forme des ; réponses de radar secondaire
- la figure 3, montre des formes de "garbling" ;
- les figures 4, montrent comment sont exploitées les grandeurs échantillonnées pour faire une analyse en temps réel des signaux reçus et en déduire les positions des impulsions ;
- la figure 5 est un tableau résumant l'utilisation de bits de doute ;
- la figure 6 représente la partie du dispositif générant le message d'échantillon à partir des différentes grandeurs reçues ;
- la figure 7, représente la partie de dispositif générant le message d'impulsion à partir des messages d'échantillon ;
- la figure 8, est un schéma fonctionnel destiné à faire comprendre comment se situent fonctionnellement les uns par rapport aux autres les dispositifs des figures 6, 7 et 9 ;
- la figure 9, représente schématiquement le dispositif de corrélation des impulsions d'une réponse détectée.

Le but du prétraitement est de rassembler suffisamment d'informations pour pouvoir "analyser" la forme du signal reçu.

Dans le mode de réalisation préféré on divise en cinq plages les résultats de variation de la grandeur $\mathrm{Log}\Sigma$

Pour ce faire on compare chaque valeur d'échantillon de cette grandeur à la valeur de l'échantillon précédant. Si l'écart est inférieur à un premier seuil, on considère que la grandeur est stable, et le bit d'une voie dédiée d'un bus est porté à la valeur 1, les autres bits représentatifs de la variation de $\mathrm{Log}\Sigma$ restant à la valeur 0. Par contre si l'écart de valeur entre deux échantillons consécutifs est supérieur à l'écart en dessous duquel on considère qu'il y a stabilité on porte à 1 sur une voie dédiée un bit représentant une pente faible ou une pente forte de variation selon que l'écart se situe dans un premier intervalle de variation ou au contraire au delà. On a de la sorte 5 bits de caractérisation de la pente de variation $\mathrm{Log}\Sigma$ car on tient compte du signe de la différence.

L'un des bits représente une variation de pente forte positive, un autre une variation de pente faible positive, un autre une variation de pente forte négative, un autre une variation de pente faible négative et enfin un bit d'état stable. Un seul de ces bits prend la valeur 1, les autres gardent la valeur 0.

Pour la grandeur $\Delta/\Sigma$, il est simplement vérifié que la variation est inférieure à un seuil fixé, ce qui signifie que le signal provient d'un secteur angulaire étroit. Si cette grandeur varie au delà du seuil entre deux échantillons consécutifs, cela signifie que le signal provient de deux transpondeurs situés dans des secteurs angulaires éloignés. On en conclura que le signal de l'échantillon précédant provient d'un autre porteur que celui de l'échantillon en cours.

Lorsque le signal devient faible il est en raison de son écart de plus en plus réduit par rapport au niveau de bruit ambiant de plus en plus susceptible de variations importantes. C'est pourquoi le niveau des seuils est selon l'invention, pour $Log\Sigma$, et $\Delta/\Sigma$ fixé en tenant compte de la valeur de $Log\Sigma$. Plus $Log\Sigma$ est faible plus la valeur du seuil fixant le niveau dit de stabilité est élevé. Il est tenu compte également du niveau de $Log\Sigma$ pour fixer les intervalles où l'on considère qu'il y a pente faible ou forte. Cette variation du niveau des seuils permet de garantir, par impulsion, un nombre constant d'échantillons ($\simeq 5$ pour une horloge d'échantillonnage à 20 MHz) et ce quel que soit le niveau du signal reçu.

Il a été vu plus haut que les transpondeurs radars peuvent émettre des réponses mode S ou des réponses secondaires. Lorsque le signal $Q\Sigma$ reste à 1 pendant une valeur supérieure à la durée d'une impulsion secondaire ou d'une impulsion mode S, on en déduit que plusieurs réponses se chevauchent, mais on ne sait pas si les impulsions qui se chevauchent correspondent à des impulsions mode S ou secondaires.

Afin de ne pas perdre d'informations on génère des pseudo fronts montants de deux façons et on affecte les fronts ainsi générés chacun sur une voie. Les pseudo fronts ainsi générés sont qualifiés pseudo fronts S ou (PLES) ou pseudo fronts normaux (PLEN) selon qu'ils sont générés en supposant qu'on a affaire à des réponses S ou secondaires.

Les pseudo fronts sont générés à une longueur d'impulsions en avant du front descendant du signal $Q\Sigma$ si la durée de $Q\Sigma$ est supérieure à la durée maximum d'une impulsion et inférieure à la durée de deux impulsions et en arrière du front montant de $Q\Sigma$ à des intervalles de temps égaux à la durée d'une impulsion et pendant toute la durée de $Q\Sigma$ si la durée du signal $Q\Sigma$ est supérieure à la durée de deux impulsions.

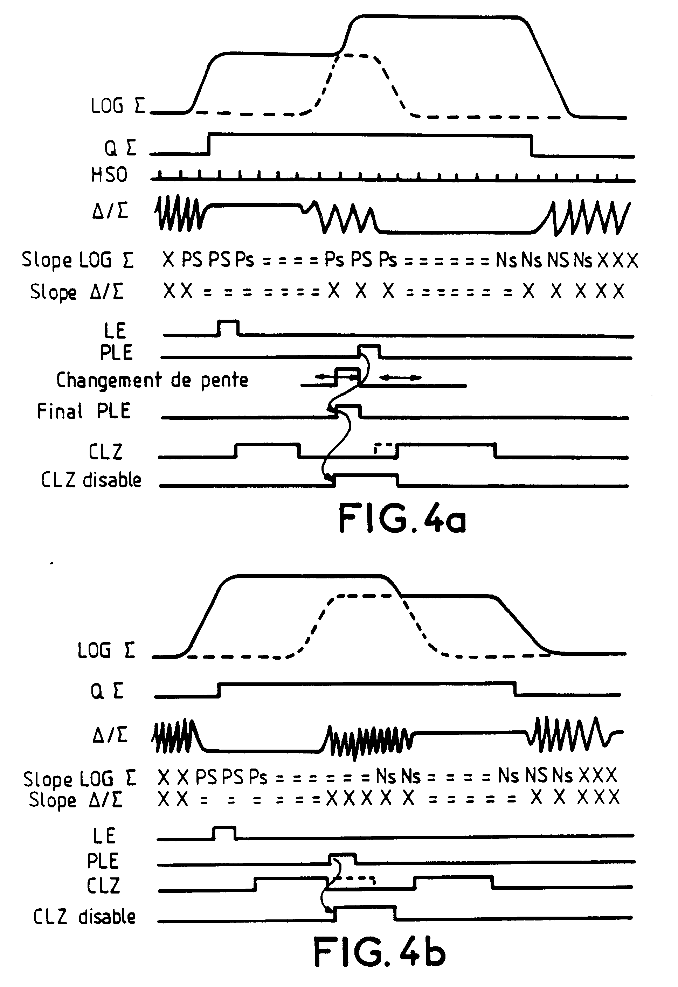

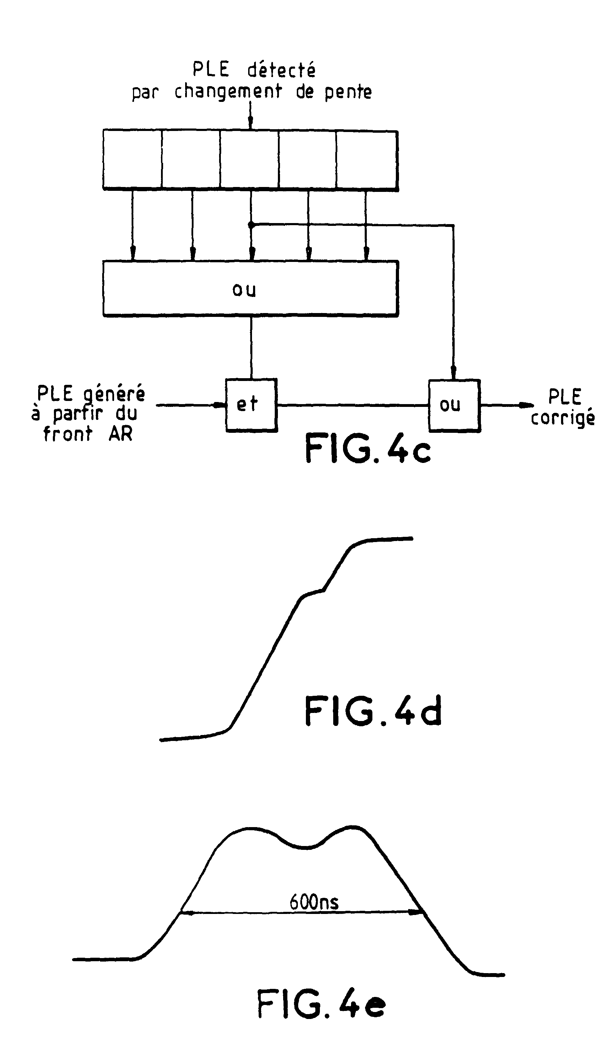

Dans la version de l'invention applicable en aval d'un récepteur de radar secondaire doté d'un circuit discriminateur de fréquence ou de phase et émettant un signal fréquence$\Sigma$, le signal de zone claire (CLZ) ne garde la valeur 1 que si à la fois $Log\Sigma$, $\Delta/\Sigma$ et fréquence$\Sigma$ sont stables. Si l'un de ces signaux varie au delà d'un seuil significatif, cela signifie que l'on a affaire à un signal qui ne provient pas de la même source que le signal représenté par l'échantillon précédant. L'observation du moment de l'instabilité de l'une de ces grandeurs permettra alors de mieux positionner les pseudo fronts montant d'impulsions. La façon de procéder est expliquée ci-après en référence à la figure 4.

Cette figure comporte deux cas représentés respectivement par les figures 4a et 4b.

Chacune de ces figures représente un ensemble de plusieurs courbes représentant chacune l'amplitude d'une grandeur en fonction du temps. Les points de ces courbes situés sur une même verticale correspondent à des mêmes instants.

Du haut vers le bas on trouve $Log\Sigma$, $Q\Sigma$, une échelle représentant le temps au pas de 50 ns (sur la figure 4a uniquement), $\Delta/\Sigma$, une ligne représentant les plages de pente de $Log\Sigma$, dite slope $Log\Sigma$, et une autre représentant celles de $\Delta/\Sigma$ dite slope $\Delta/\Sigma$, une ligne représentant les fronts montants (LE) détectés par la variation de $Q\Sigma$, une ligne représentant les fronts montants générés par prise en compte de la durée pendant laquelle $Q\Sigma$ reste à 1 (PLE), une ligne représentant la position éventuellement corrigée du front montant (final PLE). (Sur la figure 4a uniquement).

On trouve enfin une ligne représentant un signal de zone claire (CLZ) ou les valeurs des grandeurs exploitées sont stables et une ligne représentant un signal qui a la valeur 1 si au moins l'une des grandeurs est instable dite (CLZ disable).

Sur la figure 4a on a supposé qu'un début d'impulsion de niveau faible était suivi d'une impulsion de niveau plus fort sans que la différence de niveau soit supérieure à 6dB. Cela se traduit dans le niveau du signal $Log\Sigma$, par une pente positive suivit d'un état stable représenté sur la première ligne de la figure 4a par un trait horizontal, puis au moment de l'arrivé de l'impulsion de plus fort niveau par une nouvelle pente positive suivit d'un état stable et d'une pente négative. La fin de la première impulsion représentée en pointillé est masquée par le niveau plus fort de la seconde impulsion. Sur la seconde ligne de la figure 4a qui représente le signal $Q\Sigma$, on voit que ce signal reste à 1 pendant toute la durée des deux impulsions qui se chevauchent, ceci parce que la différence de niveau entre les deux impulsions est inférieure à 6 dB. Le seul examen de $Q\Sigma$ ne permettrait donc, avec les traitements existants, la génération que d'un seul front montant.

Selon l'invention l'examen de la durée anormale de $Q\Sigma$ permettra dans un premier temps de générer à 450 ns en avant du front descendant de $Log\Sigma$ une impulsion représentant un pseudo front montant (PLE) dont l'emplacement est représenté sur la ligne (PLE), de la figure 4a. Il est généré selon le même principe, en avant du front descendant de $Q\Sigma$ un pseudo front montant S. Cette génération n'est pas représentée figure 4a.

Il va être expliqué sur cet exemple comment les informations ainsi créées sont utilisées d'une part pour détecter le "garbling" d'impulsion et d'autre part pour générer une position précise de la première et de la seconde impulsion participant au "garbling". Le premier front montant LE est généré de façon classique. Le second front montant PLE est dans ce cas généré à partir de la position du front arrière. Cette génération créée sur un critère temporel va être éventuellement corrigée en s'intéressant à la pente de LogeΣ ; sur la ligne slope LogΣ, le signe X représente une valeur de LogΣ en dessous du seuil de détection, les signes PS ou NS, une pente forte positive ou négative, les signes Ps ou Ns une pente faible positive ou négative et les signes = un état stable de la pente. Chaque signe de pente forte positive qui n'est pas associé à un changement d'état de QΣ donne lieu à la génération d'un PLE. Il convient de s'assurer que le PLE ainsi généré ne fait pas "double emploi" avec le PLE généré de façon temporelle.

Le principe de cette vérification et son résultat sont explicités ci-après en référence à la figure 4c. La position du front montant PLE généré de façon temporelle peut être compte tenu des tolérances sur les largeurs d'impulsions et de l'incertitude introduite par l'échantillonnage dans cinq fenêtres consécutives de 50ns chacune. On recherche si dans ces cinq fenêtres est présent un bit de pente forte. En cas de présence on conclut à un double emploi et on positionne le PLE à l'endroit du bit de pente forte ou au centre de la plage en cas de pluralité. En cas d'absence on maintient le PLE à la position obtenue par le décalage par rapport au front arrière de la durée normalisée d'une impulsion et on a donc deux PLE. on remarque à partir des explications données sur cet exemple que cette façon de procéder permet de détecter un front montant lorsque la durée totale du signal QΣ n'est pas supérieure à la durée maximale d'une impulsion.

Ainsi sur la figure 4d, on a représenté une partie de courbe LogΣ présentant une pente forte, une pente faible et de nouveau une pente forte. Bien que les bits correspondants soient séparées au minimum de 100 ns, il est possible compte tenu des tolérances que le front arrière de la seconde impulsion se présente en même temps ou même avant le front arrière de la première impulsion. Un autre cas possible sera illustré en référence à la figure 4e qui représente une impulsion d'une durée inférieure à 600 ns au cours de laquelle on a enregistré un changement de signe sur la valeur de la pente de LogΣ, . On en conclut à un "garbling" d'impulsion et on émet un signal dit PGF sur une voie dédiée pour le signaler lors du traitement ultérieur. Les explications données ci-dessus à propos des figures 4a, 4c, 4d et 4e permettent de constater que l'un des buts de l'invention, mieux détecter les "garblings" et mieux détecter chaque impulsion est atteint grâce à l'exploitation de QΣ et des bits de pente de LogΣ, puisqu'elle permet de détecter des "garblings" et positionner des fronts montants supplémentaires alors que la durée de QΣ reste inférieure à la durée possible d'une impulsion. Cette exploitation seule peut toutefois se révéler insuffisante en cas de "garbling" entre impulsions de même niveau de puissance et quasi simultanées. L'exploitation de grandeurs supplémentaires va être maintenant illustré par le cas représenté sur la figure 4b.

Sur cette figure, on a représenté un cas où l'impulsion première est d'un niveau plus fort que l'impulsion seconde la différence de niveau étant encore inférieure à 6 dB. Le signal QΣ reste à 1 pendant une durée supérieure à la durée d'une impulsion. Le front montant de la seconde impulsion, représenté en pointillé, est masqué par le niveau supérieur de la première impulsion. L'Examen des états stables sur LogΣ, Δ/Σ et dans la version comportant le discriminateur de fréquence (non représenté) fréquenceΣ va permettre la détermination de l'impulsion de niveau de puissance le plus élevé. Sur la figure 4b, on voit par l'examen de slope Δ/Σ qu'on a un mélange de signaux, alors que la seule information sur LogΣ est faible. Le signal CLZ revient à 0. C'est ce signal qui permet d'attribuer les échantillons à un front montant particulier. Le fait qu'il revient à 0 par le fait que Δ/Σ ou fréquenceΣ n'est plus stable rompt l'attribution et engendre la mise à 1 d'un autre signal dite "CLZ disable".

L'apparition d'une pente négative sur LogΣ slope marque la fin du signal de plus forte puissance. On peut donc pour LogΣ attribuer les échantillons prélevés jusqu'à l'apparition du signal Ns pour le signal LogΣ au premier front montant d'impulsion.

On constate donc que le procédé de prétraitement selon l'invention permet d'obtenir et de sauvegarder pour le traitement ultérieur un maximum d'informations.

La fin du prétraitement est constitué par le message d'échantillon défini plus haut. On remarque que la position des pseudo fronts montants d'impulsions est constituée par des positions corrigées pour tenir compte des discontinuités des informations LogΣ, Δ/Σ et éventuellement fréquenceΣ.

A partir de ce message d'échantillon peut commencer la première partie du traitement. Elle consiste à élaborer un message d'impulsions à partir d'un ou plusieurs messages d'échantillons.

Le message d'impulsions est comme le message d'échantillon constitué par des grandeurs émises sur les voies parallèle d'un bus. Il est comme le message d'échantillon renouvelé régulièrement à la cadence d'échantillonnage. Ce message comporte sur des voies dédiées :

- une grandeur dite LE qui indique la position d'un front montant d'impulsions ;
- une grandeur dite PLE qui indique la position d'un front montant d'impulsion généré à partir d'un front arrière d'impulsion détectée ;
- une grandeur dite XLE qui indique la position d'un front montant d'impulsion généré à partir d'un front montant d'impulsion détecté, d'une manière qui sera décrite plus loin ;
- une grandeur appelée LogΣSum obtenue en faisant la somme de la valeur des échantillons LogΣ attribués à une même impulsion c'est-à-dire qui se situent dans un intervalle où le signal CLZ garde continûment la valeur 1;

- une grandeur appelée Δ/ΣSum.obtenue en faisant la somme de la valeur des échantillons Δ/Σ attribués à une même impulsion ;
- une grandeur dite SVF pouvant prendre les valeurs 0 ou 1. Cette grandeur est à la valeur 1 s'il n'a pas été possible d'associer à un front montant d'impulsion détecté des échantillons permettant de calculer des valeurs pour LogΣ et Δ/Σ ;
- des grandeurs appelées NumSam représentatives du nombre d'échantillons ayant servi à établir la valeur de paramètres caractérisant l'impulsion, . LogΣSum, Δ/ΣSum, fréquenceΣSum.

Il est établi un seul NumSam pour LogΣ pour Δ/Σ et fréquenceΣ.

Il peut enfin comporter d'autres valeurs, notamment dans une version améliorée, la valeur fréquenceΣSum dont la signification a été donnée plus haut.

Dans un mode particulier de réalisation qui sera décrit plus loin on a introduit des paramètres destinés à accélérer le traitement ultérieur notamment une grandeur appelée NextLE, représentative du nombre de temps élémentaires au bout duquel se trouve le front montant suivant. Cette indication permet d'adresser le traitement directement à une adresse représentative de la prochaine impulsion; et une grandeur drapeau appelée SVF qui indique que des grandeurs LogΣSum, Δ/Σ sum et éventuellement fréquenceΣ sum sont associées au front montant d'impulsion LE. Cette indication permet d'éliminer plus rapidement les impulsions non traitables.

Il convient de noter à ce stade que la durée du traitement, exprimée en nombre de temps élémentaires de traitement, est connue pour chaque étape du traitement et en particulier pour le message d'impulsions. Il en résulte que la présence d'une grandeur 1 sur les voies LE ou PLE est représentative de l'arrivée d'une impulsion à un moment antérieur connu. Le temps élémentaire de traitement est l'intervalle de temps séparant deux échantillons consécutifs.

La dernière phase du traitement selon l'invention, à savoir le traitement des réponses à partir des messages d'impulsions, est précédée de deux traitements qui ne font pas partie de l'invention mais qui seront succinctement décrits ci-après pour faciliter la compréhension de la deuxième phase du traitement selon l'invention.

L'un des traitements est un filtrage des réponses mode S, l'autre est la détection des réponses de radar secondaire. Le filtrage des réponses mode S comporte une détection des réponses, puis une élimination de toutes les impulsions, représentées dans le cas du traitement selon l'invention par les différents messages d'impulsions correspondants, appartenant aux réponses mode S détectées.

La présence éventuelle d'une réponse mode S est recherchée, à l'issue de chacune des périodes de temps élémentaires. La méthode de détection permet de déterminer si la réponse mode S détectée est une réponse courte (durée 64 μs) ou une réponse mode S longue (durée 120 μs).

Pour cela on mémorise dans un registre à entrée série et sorties parallèles les fronts montants d'impulsion. L'information contenue dans le registre est décalée à la cadence d'échantillonnage. Le registre a un nombre, de cases supérieur au nombre obtenu par division de la durée d'une réponse mode S courte par la période p d'échantillonnage. Le nombre de cases est tel qu'il permet de mémoriser le front montant de l'impulsion n° (56+c) d'une réponse mode S longue alors que la première impulsion du préambule de cette réponse est encore présente dans le registre. Les sorties parallèles du registre sont connectées à deux corrélateurs composés classiquement de portes "et".

Le premier corrélateur a pour but de détecter la présence simultanée des fronts montants des quatre impulsions du préambule, des b dernières impulsions d'une réponse mode S qui serait courte et le second corrélateur a pour but de détecter la présence simultanée des premières impulsions qui marque qu'on les reçoit d'une réponse mode S qui est longue. En sortie des corrélateurs on a donc une information quant à la présence d'une réponse mode S et à sa longueur. Il est donc possible d'adapter la suite du traitement de la réponse ainsi détectée, en particulier son filtrage, à la longueur de la réponse. Le filtrage, c'est à dire l'élimination des impulsions des réponses mode S de façon à ne traiter que les autres réponses de radars secondaires est effectué en considérant non seulement la position temporelle de chacune des impulsions du préambule mais aussi leur niveau de puissance et d'écartométrie.

Normalement toutes les impulsions qui appartiennent à une seule réponse sont au même niveau de puissance et ont la même écartométrie .Il est donc probable qu'une impulsion bien positionnée dans le temps mais qui a un niveau de puissance ou d'écartométrie différent de la moyenne des autres impulsions de la réponse soit une impulsion appartenant à une autre réponse.

La puissance de chacune des impulsions bien positionnées dans le temps et ainsi susceptible de constituer une partie de la réponse mode S est comparée au niveau de puissance moyen des impulsions établi préalablement. Si l'écart de puissance entre l'impulsion examinée et le niveau moyen est inférieur à un seuil préalablement fixé l'impulsion est considérée comme faisant partie de la réponse mode S. On fait de même pour l'écartométrie La valeur des seuils peut être modifiée en fonction de la valeur moyenne établie pour LogΣ. Plus la réponse est faible et plus elle est susceptible de variations importantes. On a par conséquent intérêt à augmenter la valeur du seuil de comparaison pour les puissances moyennes faibles. Cet ajustement du seuil est réalisé par paliers successifs.

Après détection les impulsions des messages appartenant à des réponses mode S sont éliminés.

Le second traitement préalable à l'exécution de la seconde phase du traitement selon l'invention consiste en la détection des réponses de radar secondaire.

Cette détection est supposée chaque fois qu'il est détecté une paire d'impulsions d'encadrement $F_1$ $F_2$. Ces paires d'impulsions sont distantes de 20,3 µs ± 100 ns. Un créneau de 50 ns (BPD) est généré pour indiquer la présence d'une réponse à la distance de l'impulsion $F_1$.

Le code de la réponse est détecté à partir de l'existence de fronts montants d'impulsions aux positions théoriques des impulsions dans une réponse de radar secondaire.

Enfin le dispositif de détection des réponses émet sur des voies dédiées d'un bus deux drapeaux de présomption de "garbling" de réponse appelés respectivement BD1 et BD2.

- BD1 si une réponse est détectée 24,65 µs au plus après la réponse en cours et à des instants successifs η x 1,45 µs ± 0,15 µs $1 \le \eta \le 17$

- BD2 si une réponse a été détectée 24,65 µs au plus avant la réponse en cours et à des instants successifs η x 1,45 µs ± 0,15 µs $1 \le \eta \le 17$

Il a été vu précédemment que la durée d'une réponse, impulsion de position (SPI) comprise, est de 24,65 µs.

Dans le cas ou BD2 est émis cela signifie qu'il va y avoir risque de confusion entre les dernières impulsions de la réponse précédente et les premières impulsions de la réponse en cours.

Dans le cas ou BD1 est émis cela signifie au contraire qu'il y a risque de confusion entre les dernières impulsions de la réponse en cours et les premières impulsions de la réponse suivante.

Les deux traitements hors invention ci-dessus ayant été effectués la deuxième phase du traitement selon l'invention peut commencer. Il convient tout d'abord de signaler que chacun des messages d'impulsions élaborés au cours de la première phase du traitement est rangé de façon ordonnée dans le temps dans une mémoire tampon. Cette mémoire doit être assez importante pour pouvoir contenir au minimum le nombre de messages d'impulsions que l'on reçoit pendant toute la durée d'une récurrence.

De préférence les cases mémoires de la mémoire pourront contenir au moins le nombre de bits contenus dans un message d'impulsions. De la sorte il pourra y avoir une correspondance biunivoque entre l'adresse de la mémoire et l'ordre d'arrivée, donc le moment du message d'impulsions.

Il convient ensuite de rappeler qu'à ce stade du traitement on dispose pour chaque réponse détectée (BPD) du contenu des messages (altitude ou identification par exemple). Ces contenus ont été établis sur l'existence d'énergie détectée sur le signal Log$\Sigma$ à des positions théoriques où l'on est susceptible d'en trouver compte tenu du codage normalisé utilisé pour les réponses.

L'intérêt du traitement qui va être ci-après décrit est de valider le code ainsi détecté en lui attribuant des bits de confiance. Il est aussi de pouvoir calculer des valeurs moyennes pour les grandeurs Log$\Sigma$, $\Delta/\Sigma$ et pour les récepteurs équipés de discriminateurs de fréquence, la valeur de fréquence$\Sigma$.

Il peut consister également à établir différents drapeaux de signalisation.

La validation du code va être établie en vérifiant que pour chaque impulsion détectée comme appartenant à une réponse en fonction de sa position il y a corrélation avec une valeur moyenne de la réponse. La position d'une impulsion et donc du message la caractérisant est repérée par son adresse. La valeur moyenne sera établie de façon itérative. La première valeur moyenne sera établie sur les impulsions d'encadrement si un message d'impulsion les caractérise. Il est rappelé que dans le traitement selon l'invention lorsqu'on travaille en position d'impulsion, on travaille sur les fronts montants d'impulsions représentés par des signaux LE sur des voies dédiées. Lorsqu'aucun échantillon n'est disponible pour calculer les paramètres de l'impulsion, le message d'impulsion, contenant l'indication de front montant comporte un drapeau SVF qui est égal à 1. En conséquence si SVF est égal à 1 pour l'une des deux impulsions d'encadrement seule l'impulsion pour laquelle SVF = 0 sera utilisée. Si SVF est égal à 1 pour les deux impulsions $F_1$ et $F_2$, il n'est pas possible d'établir une référence, le traitement suivant en sera informé par l'émission d'un bit dit NRF sur une voie dédiée ; la valeur de ce bit sera portée à 1. Si SVF est égal à 0 pour les deux impulsions, les deux impulsions sont à priori utilisables.

Dans ce cas un test supplémentaire sera fait pour vérifier que les deux impulsions corrèlent. Il est dit que deux impulsions corrèlent si les différences entre deux grandeurs identiques caractérisant chacune des impulsions sont inférieures à un seuil déterminé. Le seuil peut être variable, par exemple par paliers pour tenir compte du niveau absolu des grandeurs et donc avoir une tolérance au bruit pour les faibles niveaux.

Pour vérifier la corrélation entre les deux impulsions d'encadrement on fait donc les différences entres les valeurs Log$\Sigma$, $\Delta/\Sigma$ et éventuellement fréquence$\Sigma$ des deux impulsions. Des bits de doute respectivement BD7, BD6 et BD5 prennent la valeur 0, s'il y a corrélation ou la valeur 1 si pour la grandeur considérée il n'y a pas corrélation. S'il y a corrélation pour toutes les grandeurs testées c'est à dire si la somme logique des bits de doute est égale à 0, la valeur moyenne de référence sera pour chacune des grandeurs, la valeur obtenue en faisant la somme des valeurs contenues pour cette grandeur dans les messages d'impulsion de $F_1$ et $F_2$, et en divisant par la somme des nombres d'échantillons de la première et de la seconde impulsion. Par exemple, pour Log$\Sigma$ la valeur moyenne sera obtenue selon la formule.

$$\frac{\text{Log } \Sigma \text{ Sum1} + \text{Log } \Sigma \text{ Sum2}}{\text{NumSam1} + \text{NumSam2}} \tag{1}$$

formule dans laquelle

Log∑Sum1 est le Log∑Sum de la 1ère impulsion $F_1$

Log∑Sum2 est le Log∑Sum de la 2ème impulsion $F_2$

NumSam1 est le NumSam de la 1ère impulsion

NumSam 2 est le NumSam de la 2ème impulsion

Ces deux grandeurs figurent dans le message d'impulsion de chacune des deux impulsions.

Si la somme logique des bits de doute est égale à 1, c'est à dire si l'un au moins des bits de doutes est égal à 1, on considère que les deux impulsions ne corrèlent pas, et il convient alors de choisir l'une ou l'autre ou éventuellement de les prendre ou de les rejeter toutes les deux. Pour faire ce choix, on considère alors la valeur des bits de présomption de "garbling" BD1 et BD2 qui on le rappelle, signalent une probabilité de garbling avec une réponse suivante ou précédante. Si BD1 et BD2 sont à 0, cela signifie qu'il n'y a pas "garbling" de réponse et dans ce cas les valeurs moyennes seront établies sur la première impulsion.

Si l'un des bits de doute est à 1, cela signifie qu'il est possible que $F_1$ ou $F_2$ soit "garblée" avec une impulsion quelconque d'une réponse précédente ou suivante. Dans ce cas la valeur moyenne de référence sera établie sur la seule impulsion qui a priori n'est pas garblée, c'est à dire $F_1$ si BD1 = 1 et $F_2$ si BD2 = 1.

Enfin si BD1 et BD2 sont égaux à 1 et si les deux impulsions ne corrèlent pas, la réponse est considérée comme une réponse fantôme, elle sera éliminée dans la suite du traitement.

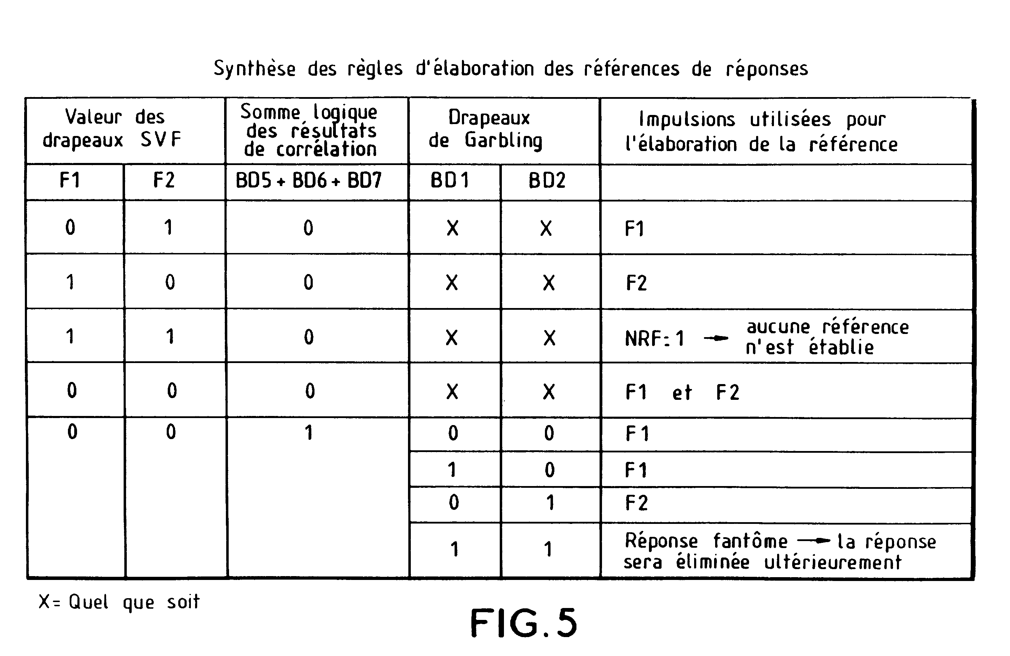

La façon dont les bits de doute BD1, BD2 et BD5 à BD7 sont pris en compte pour établir la valeur initiale de la référence est précisée dans le tableau de la figure 5. Dans ce tableau les croix dans les colonnes BD1 ou BD2 sont destinées à marquer que la valeur du bit n'est pas prise en compte. Dans la colonne BD5 + BD6 + BD7 la valeur de BD5 n'est prise en compte pour établir une somme logique, que dans les dispositifs munis d'un discriminateur de fréquence. Un 1 dans les colonnes $F_1$ ou $F_2$ signifie qu'il n'y a pas d'échantillons disponibles pour calculer la valeur des paramètres de l'impulsion (SVF = 1).

Une fois les valeurs de référence établies, il est possible d'attribuer à chacune des impulsions qui de par leur positions peuvent appartenir à la réponse étudiée des bits de confiance. Ces bits appelés BC5 pour la corrélation éventuelle sur fréquence∑, BC6 pour la corrélation sur Δ/∑, et BC7 pour la corrélation sur Log∑ prennent la valeur 0 si la corrélation avec la référence est bonne et 1 dans le cas contraire.

Le critère de bonne corrélation est le même que dans le cas de la comparaison des impulsions $F_1$ et $F_2$.

Si la corrélation n'est pas satisfaite on procède à un traitement supplémentaire utilisant l'information nextLE. On rappelle que cette information est représentative du nombre de temps élémentaires séparant l'impulsion courante de l'impulsion suivante. On rappelle également que la sélection des adresses des messages d'impulsion appartenant à une réponse détectée se fait par considération de la position temporelle théorique des fronts montants LE des impulsions. Compte-tenu des tolérances et des incertitudes liées à l'échantillonnage, une impulsion susceptible d'appartenir à la réponse peut avoir sept adresses consécutives possibles. Dans ce groupe de sept adresses il peut y avoir plus d'un message d'impulsion significatif. C'est pourquoi si la première des impulsions de ce groupe ne corrèle pas, on vérifie par l'information nextLE si l'impulsion suivante se situe dans ce groupe d'adresses. Dans l'affirmative le traitement de corrélation est recommencée avec l'impulsion suivante.

La décision de retenir ou non une impulsion ne corrélant pas est prise en considérant non seulement la somme logique des bits de confiance attribués à cette impulsion mais aussi la valeur de bit de doute $BD_3$ et $BD_4$ attribués à chaque impulsion. La longueur d'une réponse comportant une impulsion de position SPI est de 24,65 µs. Cette durée représente 17 intervalles de 1.45 µs entre positions théoriques de fronts montants d'impulsions. La durée séparant deux réponses (deux fronts montants d'impulsions $F_1$) est mesurée pour cette fonction en nombre d'intervalles séparant deux positions théoriques d'impulsions. Il peut y avoir "garbling" si cette durée est aux tolérances près égale à un nombre entier "n" d'intervalles inférieur à 17.

Chaque impulsion peut ainsi recevoir un bit de doute BD3 ou BD4 attribués de la même façon que BD1 et BD2 pour les impulsions d'encadrement.

La décision de retenir ou non une impulsion est prise de la même façon que celle qui a été exposée plus haut et qui fait l'objet du tableau de la figure 5, BC5, BC6, BC7, BD3 et BD4 remplaçant respectivement BD5, BD6, BD7, BD1 et BD2.

A l'issue de cette opération on connaît les impulsions qui font partie de la réponse et il est donc possible d'établir le message corrigé ou définitif de la réponse.

Il est effectué également une autre opération consistant à calculer la valeur moyenne de chacun des paramètres de la réponse. Cette valeur est établie en prenant en compte toutes les impulsions ayant participé à la réponse. Ainsi par exemple pour Log∑ la valeur moyenne globale est calculée selon la formule

$$\text{Log } \Sigma_M = \frac{\text{Log } \Sigma\text{Sum1} + \text{Log } \Sigma\text{Sum2} + ... \text{Log } \Sigma \text{ sumN}}{\text{NumSam1} + \text{NumSam2} + ... \text{NumSamN}}$$

N représente le nombre d'impulsions corrélées ayant participé à la réponse.

Ces valeurs sont ensuite employées pour établir des corrélations entre réponses successives et vérifier qu'il s'agit de réponses provenant d'une même origine.

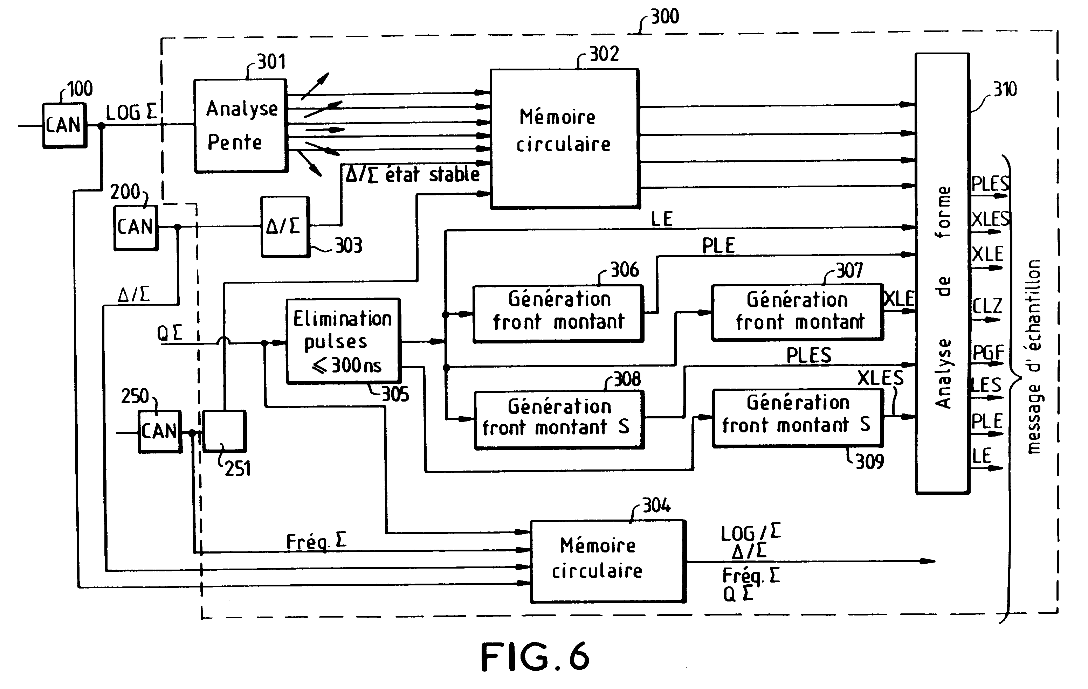

Un dispositif permettant de réaliser l'invention sera maintenant décrit en référence aux figures 6 à 9.

La figure 6 représente le dispositif générant le message d'échantillon.

Ce dispositif reçoit de convertisseurs 100, 200, 250 les échantillons des grandeurs LogΣ, Δ/Σ et fréquenceΣ. Il reçoit également la grandeur numérisée QΣ. Les échantillons sont prélevés simultanément à une cadence de 20 MHz sur commande d'une horloge non représentée.

La grandeur LogΣ est introduite dans un dispositif 301. Ce dispositif compare la valeur d'un échantillon suivant à la valeur d'un échantillon précédent. Le résultat est constitué par les cinq bits de pente explicités plus haut. Chaque message de cinq bits en sortie de l'analyseur 301 est stocké dans une mémoire circulaire 302.

De même les échantillons de Δ/Σ et fréquenceΣ sont introduits dans des analyseurs de variation 303, 251 qui comparent la valeur de l'échantillon suivant à la valeur de l'échantillon précédent. Le résultat de cette comparaison sur un bit, état stable ou variation est introduit lui aussi en séquence dans la mémoire 302. Les dispositifs 303 et 251 comportent une petite mémoire circulaire de stockage destinée à compenser les différences de temps de traitement entre les dispositifs 301 et 303. Ainsi chaque message sur sept bits (5+2) de la mémoire 302 est relatif à un même moment d'échantillonnage.

Les valeurs des échantillons des grandeurs elles-même sont stockées en séquence dans une mémoire circulaire 304. Le stockage dans les mémoires 302 et 304 est destiné à la conservation des informations pendant une première phase de détection et de génération de fronts montants effectuée sur le signal QΣ. Ce signal est introduit dans un dispositif 305 destiné à éliminer les impulsions de durée inférieure à 300 ns.

A la cadence d'échantillonnage les valeurs de QΣ sont envoyées vers un dispositif d'analyse de forme 310.

Ce dispositif reçoit également par d'autres voies les résultats du traitement du signal QΣ dans deux circuits parallèles de générations de fronts montants. Ces circuits sont constitués des dispositifs 306, 307 et 308, 309.

Le dispositif 306 compte les échantillons consécutifs pendant lesquels QΣ garde la valeur 1. Si cette valeur atteint 13 (soit 600 ns) un front montant PLE est généré et envoyé vers le dispositif d'analyse de forme 310. Un deuxième élément du circuit 307 reçoit les valeurs de QΣ et génère un front montant d'impulsion XLE lorsque le comptage révèle 19 échantillons consécutifs à la valeur 1. Un autre XLE est généré pour les passages du compteur à 28, 37... soit toutes les 450 ns.

Le deuxième circuit 308, 309 génère des fronts montants PLES et XLES de la même façon mais pour des nombres consécutifs d'échantillons qui correspondent aux durées des impulsions de réponse S. Le circuit d'analyse de forme 310 reçoit en séquence et correspondant à un même moment d'échantillonnage les valeurs des pentes de LogΣ, Δ/Σ fréquenceΣ les positions initiales des LE, PLE, XLE, PLES et XLES. Ce circuit comporte des circuits logiques, porte et, ou... qui de façon connue en soi élabore les corrections de position des fronts montants, le signal de zone clair CLZ et le signal d'impulsion garblée PGF. L'ensemble de ces grandeurs et les grandeurs LogΣ, Δ/Σ fréquenceΣ et QΣ constituent des grandeurs du message d'échantillon.

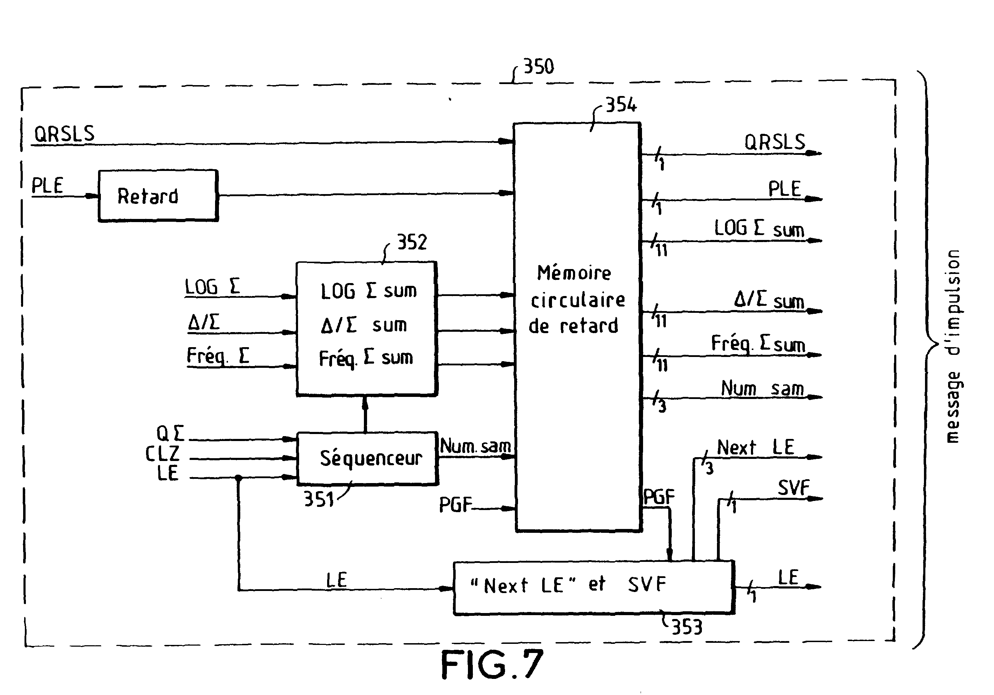

Les messages d'échantillons comportent une indication de front montant d'impulsion LE ou n'en comportent pas. Les valeurs des messages d'échantillons situées entre deux messages d'échantillon comportant un LE, un premier et un second sont attribuées au premier pour constituer le message d' impulsion L'information élaborée contenue dans le message d'impulsion est donc essentiellement la position des fronts montants d'impulsion. C'est cette information qui sera utilisée par la suite pour repérer les successions d'impulsions qui de par leurs positions temporelles sont susceptibles d'appartenir à une même réponse. Les positions de ces impulsions ayant été détectées, il conviendra selon l'invention de confirmer que les impulsions ainsi repérées appartiennent bien à la réponse. Ceci sera fait comme expliqué plus haut en comparant les valeurs de grandeurs relatives à l'impulsion à une valeur moyenne. Il faut auparavant établir les valeurs des grandeurs de l'impulsion. Tel est l'objet du dispositif 350 représenté figure 7. Ce dispositif reçoit le message d'échantillon.

Les grandeurs QΣ, CLZ et LE sont reçues par un séquenceur 351 qui commande des sommateurs 352 qui additionnent les valeurs d'échantillons de chacune des grandeurs LogΣ, fréquenceΣ et Δ/Σ. Un dispositif 353 reçoit les grandeurs LE et PGF et élabore ou transmet les grandeurs LE, nextLE et SVF. Le séquenceur 351 compte le nombre d'échantillons attribués à chaque grandeur introduite dans le sommateur. Le résultat est constitué par la grandeur NumSam.

Les grandeurs en sortie des dispositifs 351 et 352 sont introduites dans une mémoire circulaire 354 destinée à conserver les valeurs pendant que le dispositif 353 élabore le signal nextLE. En sortie du dispositif 350 on a des messages d'impulsion. Celui-ci comporte les grandeurs LogΣSum, Δ/ΣSum, NumSam, nextLE, SVF, LE, PLE XLE, LES XLES, PLES qui ont été définies plus haut.

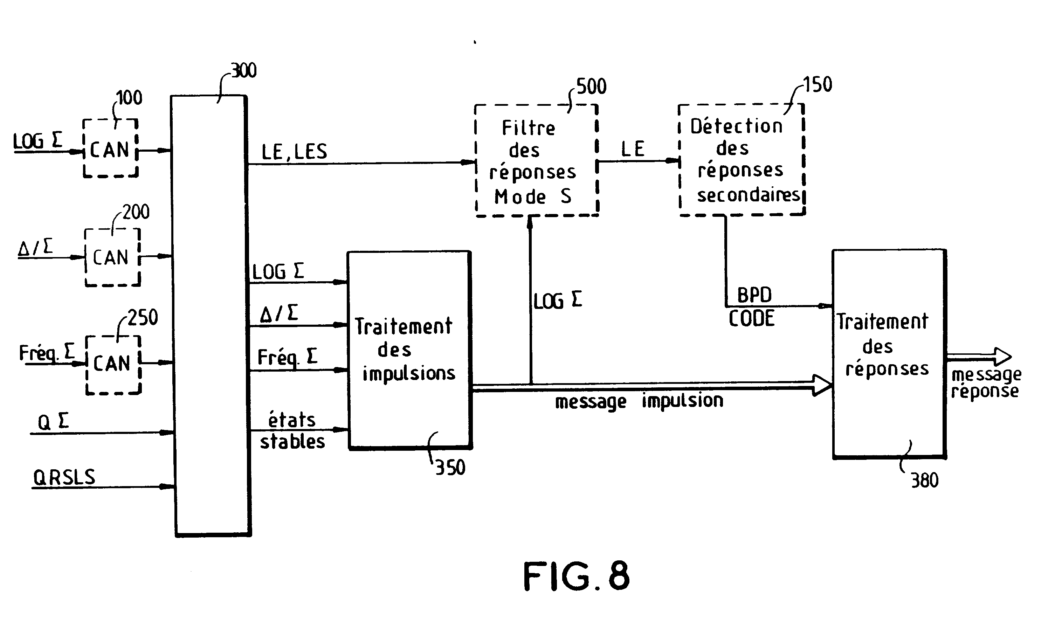

Ces messages d'impulsion seront utilisés pour valider les résultats de détection obtenus sur des critères temporels. Pour mieux faire comprendre à quel moment se situe la phase ultérieure du traitement selon l'invention, il sera maintenant expliqué en référence à la figure 8 à quel moment intervient ce traitement ultérieur dans la suite du processus. Sur cette figure on a représenté le dispositif 300 et le dispositif 350. On a représenté également en pointillé car il ne font pas partie de l'invention des dispositifs 500 et 150. Le dispositif 500 reçoit les grandeurs LE, LES du message d'impulsion et élimine après détection toutes les impulsions qui ont été reconnues et confirmées par ce dispositif comme appartenant à des réponses mode S.

Les LE ayant passé ce filtre sont introduits dans le dispositif 150 qui détecte lui les réponses de radar secondaire. A chaque détection, le dispositif 150 émet un signal de détection BPD. A partir de ce signal il est possible de retrouver l'adresse des messages d'impulsions en attente dans une mémoire circulaire, et donc de commencer le traitement des réponses. Ce traitement est effectué par un dispositif 380 qui reçoit le signal BPD et les message d'impulsion.

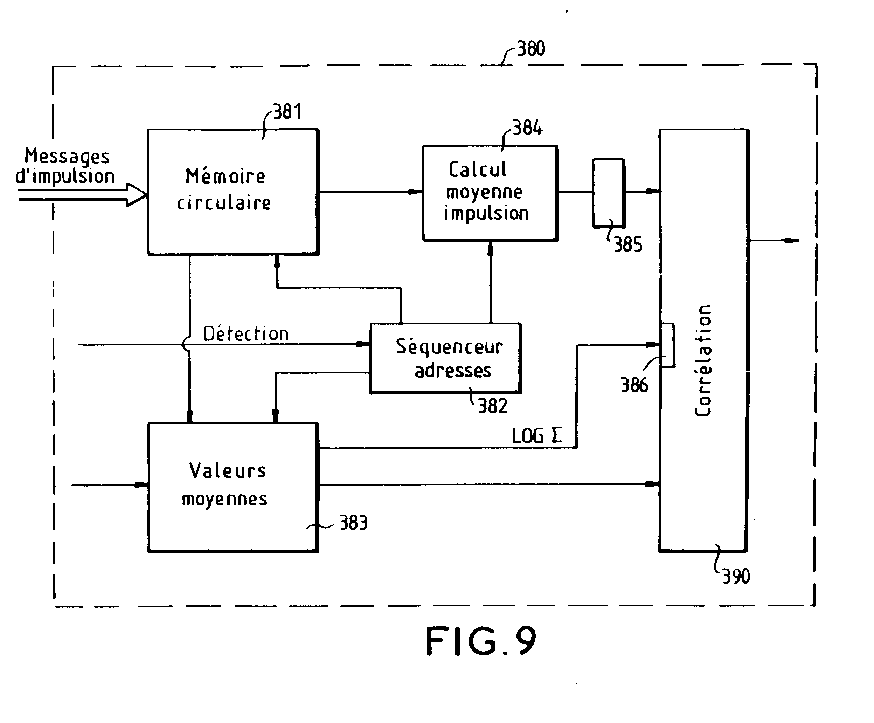

Le dispositif 380 est représenté figure 9. Il comporte une mémoire circulaire 381 qui reçoit les messages d'impulsion. Un module 382 reçoit le signal BPD et calcule à partir de ce signal les adresses des messages d'impulsions.

Le calcul d'adresse est double. Un premier calcul sélectionne les adresses des impulsions qui selon des critères prédéterminés vont servir au calcul des valeurs moyennes sur les différentes grandeurs de la réponse. Ce calcul est effectué par un module 383 qui reçoit les messages des impulsions sélectionnées en particulier les valeurs Sum et NumSam. La moyenne est pour chaque grandeur le résultat de la division de la somme des valeurs Sum des impulsions, par la somme des valeurs NumSam de ces grandeurs. Le séquenceur effectue un deuxième calcul d'adresse, et les messages d'impulsions correspondants sont envoyés à un module 384 qui calcule pour chaque grandeur la moyenne de la valeur de l'échantillon en divisant la grandeur Sum par la grandeur NumSam associée. Le résultat est introduit dans une mémoire de stockage 385 destiné à conserver les valeurs pendant le calcul de la valeur moyenne. Les grandeurs en sortie des modules 385 et 383 sont introduites dans le dispositif 390 qui est un comparateur. Les impulsions ne sont validées que si la différence entre chacune de leurs valeurs et la valeur moyenne correspondante est inférieure à un seuil prédéterminé. La valeur des seuils est ajustée par un module 386 qui reçoit la valeur moyenne de $\text{Log}\Sigma$ en sortie du module 383.

## Revendications

1. Procédé de prétraitement en temps réel de signaux émis par un transpondeur radar, les signaux des transpondeurs étant constitués de trains d'impulsions dites S et dites secondaire, les impulsions étant de durées et d'espacements normalisés, le procédé étant mis en oeuvre dans un extracteur de radar secondaire situé fonctionnellement en aval d'un récepteur muni de circuits produisant à partir des signaux reçus des grandeurs analogiques proportionnelles au logarithme de la puissance reçue et représentatives de l'écart angulaire par rapport à l'axe de l'antenne, respectivement, dénommées conventionnellement $\text{Log}\Sigma$, $\Delta/\Sigma$ et une grandeur numérique $Q\Sigma$ pouvant prendre la valeur 0 ou 1, le passage à 1 de cette grandeur étant le signe de la présence d'un front montant d'impulsion LE, et d'autres grandeurs, ces grandeurs étant ensuite transformées en signaux numériques par prélèvement d'échantillons à une cadence dite d'échantillonnage, procédé selon lequel :

   a) la prise d'échantillons des différentes grandeurs est synchronisée par un même signal d'horloge ;
   b) la cadence de prélèvement d'échantillons est assez grande pour que soient pris plusieurs échantillons pendant la durée de l'impulsion normalisée la plus courte ; et caractérisé en ce que :
   c) la valeur d'un échantillon suivant représentant une grandeur est comparée à la valeur d'un échantillon précédant de la même grandeur, le résultat de la comparaison provoquant le passage à 1 d'un bit parmi plusieurs, sur chacune des voies représentant lesdites grandeurs, chacun des bits pouvant prendre la valeur 1 et étant représentatif d'une plage de pente de variation de la grandeur;
   d) on génère si la grandeur $Q\Sigma$ reste à la valeur 1 pendant un temps supérieur à la durée d'une impulsion normale ou S augmentée de la valeur de la durée de la tolérance et de l'intervalle de temps entre deux échantillons successifs des pseudo fronts montants d'impulsions PLE ;
   e) on procède à des examens de la façon dont varient les valeurs sur un bit créées à l'étape c, et l'on crée sur un bit, un signal dit zone claire CLZ qui prend la valeur 1 et la garde tant que ces valeurs restent simultanément à des valeurs marquant un état stable et un signal dit drapeau PGF d'amalgame chaque fois qu'il est détecté un changement marquant une variation de la pente d'une grandeur ;
   f) on transmet à des étages de traitement ultérieurs un message dit d'échantillon, le message étant renouvelé à chaque échantillon, le message comportant sur un bit les signaux $Q\Sigma$, LE et PLE, PGF, CLZ et sur plusieurs bits les valeurs numériques des grandeurs échantillonnées.

2. Procédé de prétraitement selon la revendication 1, caractérisé en ce que les différents bits représentatifs de la pente de variation du signal $\text{Log}\Sigma$ sont au nombre de 5 chacun des bits étant représentatif respectivement :

   - d'une variation de pente forte positive
   - d'une variation de pente faible positive
   - d'une variation de pente faible négative
   - d'une variation de pente forte négative
   - d'un état stable

   et en ce qu'il n'y a qu'un bit représentatif de la pente de $\Delta/\Sigma$ ce bit prenant la valeur 1 si $\Delta/\Sigma$ est stable et la valeur 0 dans le cas contraire.

3. Procédé selon la revendication 2, caractérisé en ce que le bit représentatif de l'état stable de LogΣ passe à 1 et garde cette valeur aussi longtemps que la différence de niveau entre un échantillon suivant et un échantillon précédent est inférieure à un seuil fixé à l'avance, le seuil ayant des valeurs croissantes lorsque LogΣ décroît.

4. Procédé selon l'une des revendications 1 à 3, caractérisé en ce que les pseudo fronts montants d'impulsion PLE sont générés sur deux voies dédiées, une voie recevant des pseudo fronts correspondant à des longueurs d'impulsions dite normales PLE et une voie recevant des pseudo fronts correspondant à des longueurs d'impulsions S PLES, le message d'échantillon comportant une voies pour les-PLE et une voie pour les PLES.

5. Procédé selon la revendication 4, caractérisé en ce que les pseudo fronts sont générés à une longueur d'impulsion en avant du front descendant du signal QΣ si la durée de QΣ est inférieure à la durée de deux impulsions et en arrière du front montant de QΣ à des intervalles de temps égaux à la durée d'une impulsion et pendant toute la durée de QΣ si la durée du signal QΣ est supérieure à la durée de deux impulsions.

6. Procédé de prétraitement temps réel selon l'une des revendications 1 à 5, mis en oeuvre dans un extracteur situé en aval d'un récepteur doté d'un circuit d'analyse de la fréquence des signaux reçus, le circuit créant une grandeur dite fréquenceΣ représentative de la valeur de la fréquence du signal reçu,caractérisé en ce que le signal de zone claire CLZ ne prend la valeur 1 que si les valeurs de LogΣ, Δ/Σ fréquence Σ sont stables.

7. Procédé selon l'une des revendications 5 ou 6, caractérisé en ce que la position des pseudo fronts montants d'impulsions est corrigée, après comparaison des variations des grandeurs LogΣ, Δ/Σ et éventuellement fréquenceΣ.

8. Procédé selon la revendication 7, caractérisé en ce que les informations des messages d'échantillons consécutifs situés dans une zone où la valeur du signal de zone claire CLZ garde continûment la valeur 1 sont traités pour constituer un message dit d'impulsion.

9. Procédé selon la revendication 8, caractérisé en ce que le message d'impulsion comporte sur un bit

- une grandeur dite LE représentative d'un front montant d'impulsion
- une grandeur dite PLE représentative d'un front montant d'impulsion calculé

- une grandeur dite SVF dont la valeur 1 indique qu'il n'a pas été possible d'attribuer des échantillons Log Σ, Δ/Σ à cette impulsion et sur plusieurs bits,
- une grandeur appelée LogΣSum représentant la somme des valeurs LogΣ des messages d'échantillon pris en compte pour établir le message d'impulsion;
- une grandeur appelée Δ/ΣSum représentant la somme des valeurs Δ/Σ des messages d'échantillon pris en compte pour établir le message d'impulsions
- une grandeur appelée NumSam représentant le nombre d'échantillons pris en compte pour établir chaque grandeur du message d'impulsion.

10. Procédé selon la revendication 9, caractérisé en ce que les messages d'impulsion dont l'une des valeurs LE ou PLE est égale à 1 comportent en outre sur plusieurs bits une grandeur appelée Next LE représentative du temps au bout duquel un nouveau front montant d'impulsion est présent.

11. Procédé selon la revendication 10, mis en oeuvre dans un extracteur dans lequel la détection d'une réponse est assurée par la détection d'une paire d'impulsions dite d'encadrement, la paire comportant une première impulsion dite $F_1$ qui est la première du train et une seconde impulsion $F_2$, séparée par un temps normalisé connu de la première impulsion et dans lequel chaque signal de détection dit BPD est associé à une première grandeur sur un bit, dit bit de présomption de "garbling" 1 BD1 qui prend la valeur 1 si une autre réponse a été détectée après la réponse en cours à un intervalle de temps de la première impulsion $F_1$ inférieur à la durée maximum du train d'impulsions constituant une réponse et à une seconde grandeur sur un bit appelé bit de présomption de "garbling" 2 BD2 qui prend la valeur 1 si une autre réponse a été détectée avant la réponse en cours à un intervalle de temps inférieure à la durée maximale du train d'impulsion constituant une réponse, caractérisé en ce que, on soustrait l'une de l'autre les valeurs $\frac{Log\ \Sigma\ Sum}{NumSam}$ de l'impulsion $F_1$ et de l'impulsion $F_2$ et que l'on émet un bit de doute BD7 caractérisant la réponse, qui prend la valeur 1 si la différence est supérieure à un seuil prédéterminé.

12. Procédé selon la revendication 11, caractérisé en ce que on soustrait en outre l'une de l'autre les valeurs $\frac{\Delta/\Sigma\ Sum}{NumSam}$ de l'impulsion $F_1$ et de l'impulsion $F_2$ et que l'on émet un bit de doute BD6, caractérisant la réponse, qui prend la valeur 1 si la différence est supérieure à un seuil prédéterminé.

13. Procédé selon la revendication 12, mis en oeuvre dans un extracteur situé en aval d'un récepteur doté d'un circuit d'analyse de la fréquence des signaux reçus, caractérisé en ce que on soustrait l'une de l'autre les valeurs $\frac{\text{fréquence}\Sigma\text{Sum}}{\text{NumSam}}$ de l'impulsion $F_1$ et de l'impulsion $F_2$ et que l'on émet un bit de doute BD5, caractérisant la réponse qui prend la valeur 1 si la différence est supérieure à un seuil prédéterminé.

14. Procédé selon la revendication 11, caractérisé en ce que on établit une valeur moyenne de $\text{Log}\Sigma$ :

- sur $F_1$ et $F_2$, si des messages d'impulsions sont disponibles sur $F_1$ et $F_2$, si BD7 a la valeur 0 :
- sur F1 seulement si BD7 est égal à 1 et BD1 est égal 1 ou si BD7 a la valeur 1 et que les deux bits de doute BD1 et BD2 ont la valeur 0 ;
- sur F2 seulement si BD7 est égal à 1 et BD2 est égal à 1 et que l'on décide que la réponse est une réponse fantôme si BD7 est égal à 1 et que BD1 et BD2 sont égaux à 1.

15. Procédé selon la revendication 12, caractérisé en ce que on établit une valeur moyenne de $\Delta/\Sigma$ et fréquence$\Sigma$ :

- sur F1 et F2; si des messages d'impulsions sont disponibles sur F1 et F2 si la somme logique (BD5 + BD6) a la valeur 0 ;
- sur F1 seulement si la somme logique (BD5+BD6) est égale à 1 et BD1 est égal à 1 ou si la somme logique (BD5+BD6) a la valeur 1 et que les deux bits de doute BD1 et BD2 ont la valeur 0 ;
- sur F2 seulement si la somme logique (BD5+BD6) est égal à 1 et BD2 est égal à 1

et que l'on décide que la réponse est une réponse fantôme si la somme logique (BD5+BD6) est égal à 1 et que BD1 et BD2 sont égaux à 1.

16. Procédé selon la revendication 13, caractérisé en ce que on établit une valeur moyenne de $\text{Log}\Sigma$, $\Delta/\Sigma$ et fréquence$\Sigma$ :

- sur $F_1$ et $F_2$; si des messages d'impulsions sont disponibles sur $F_1$ et $F_2$ si la somme logique (BD5 + BD6 +BD7) a la valeur 0 ;
- sur $F_1$ seulement si la somme logique (BD5 + BD6 + BD7) est égal à 1 et BD1 est égal à 1 ou si la somme logique (BD5 + BD6 + BD7) a la valeur 1 et que les deux bits de doute BD1 et BD2 ont la valeur 0 ;
- sur $F_2$ seulement si la somme logique (BD5 + BD6 + BD7) est égal à 1 et BD2 est égal à 1

et que l'on décide que la réponse est une réponse fantôme si la somme logique (BD5 + BD6 +BD7) est égal à 1 et que BD1 et BD2 sont égaux à 1.

17. Procédé selon l'une des revendications 14 à 16, caractérisé en ce que si BD à la valeur 1 il est attribué un bit de doute 3D3, BD4 à chacune des dernières impulsions considérées de par leur position comme faisant partie de la réponse, ce bit prenant la valeur 1 si cette impulsion se trouve dans l'intervalle de temps où la réponse suivante peut être présente et en ce que si BD2 à la valeur 1 il est attribué un bit de doute BD5 à chacune des premières impulsions considérées de par leur position comme faisant partie de la réponse, ce bit prenant la valeur 1 si cette impulsion se trouve dans l'intervalle de temps où la réponse précédente peut être présente et en ce que l'on compare la valeur d'au moins une des grandeurs $\text{Log}\Sigma$, $\Delta/\Sigma$, fréquence$\Sigma$ de chaque impulsion qui de par sa position appartient à la réponse détectée à la valeur moyenne correspondante de la réponse et que l'on émet un bit de confiance BC7 pour $\text{Log}\Sigma$, BC6 pour $\Delta/\Sigma$ et BC5 pour fréquence$\Sigma$, ce bit prenant la valeur 1 si la différence entre la valeur de l'impulsion et la valeur moyenne est supérieure à un seuil prédéterminé et que l'on élimine l'impulsion de la réponse si l'un des bits de doute BD4 ou BD3 a la valeur 1 et si la somme logique (BC4 + BC5 + BC6) à la valeur 1.

18. Dispositif de prétraitement en temps réel d'un signal de réponse de transpondeur radar, le signal du transpondeur étant constitué de trains d'impulsions dites S et dites secondaires, les impulsions étant de durées et d'espacements normalisés, le dispositif étant situé fonctionnellement en aval de circuits produisant à partir de signaux reçus des signaux analogiques proportionnels au logarithme de la puissance reçue et représentatifs de l'écart angulaire par rapport à l'axe de l'antenne, respectivement, dénommés conventionnellement $\text{Log}\Sigma$, $\Delta/\Sigma$ et d'autres signaux et un signal numérique Q$\Sigma$ pouvant prendre la valeur 0 ou 1, le passage à 1 de ce signal étant le signe de la présence d'un front montant d'impulsion LE, qui comporte sur une première ligne de traitement :

- des convertisseurs (100, 200) recevant les signaux analogiques $\text{Log}\Sigma$ et $\Delta/\Sigma$, et les transformant en signaux numériques à une fréquence dite d'échantillonnage ; caractérisé en ce qu'il comporte :
- un circuit (301) recevant les signaux $\text{Log}\Sigma$ et $\Delta/\Sigma$ échantillonnés et réalisant une comparaison des valeurs de l'échantillon précédant et de la valeur de l'échantillon en cours et produisant un signal sur un bit dit slope $\text{Log}\Sigma$ et $\Delta/\Sigma$, sur une voie dédiée d'un bus comportant plusieurs voies, la voie sélectionnée dépendant du résultat de la comparaison ;

- une mémoire circulaire (302) recevant à la cadence d'échantillonnage en provenance du circuit (301) un message comportant plusieurs bits dont un seul a la valeur 1
- sur une seconde ligne de traitement un module (306) recevant les échantillons de la valeur du signal QΣ et élaborant un signal PLE si QΣ reste à la valeur 1 pendant un temps au moins égal à la durée maximum d'une impulsion augmentée de l'incertitude due à l'échantillonnage et un circuit (307) recevant les échantillons du signal QΣ et élaborant un signal dit XLE si QΣ garde la valeur 1 pendant un temps supérieur à la durée de deux impulsions, les premières et secondes lignes alimentant un circuit (310) dit d'analyse de forme.
- sur une troisième ligne de traitement, une mémoire circulaire (304) recevant les signaux LogΣ et Δ/Σ, le circuit d'analyse de forme (310) et la mémoire circulaire (304) délivrant à la fréquence d'échantillonnage un message dit d'échantillon, le message comportant sur un bit les signaux QΣ, LE et PLE, un signal de zone claire CLZ qui prend la valeur 1 et la garde tant que les signaux, LogΣ et Δ/Σ, restent simultanément à des valeurs marquant un état stable et un signal drapeau PGF d'amalgame chaque fois qu'il est détecté un changement marquant une variation de pente desdits signaux, et sur plusieurs bits les valeurs numériques des signaux échantillonnés.

19. Dispositif selon la revendication 18, caractérisé en ce qu'il comporte en outre un module (308) recevant le signal QΣ et élaborant un signal PLES si QΣ reste à la valeur 1 pendant un temps supérieur à la durée d'une impulsion S, un module (309) recevant le signal QΣ et élaborant un signal XLES si QΣ reste à la valeur 1 pendant un temps au moins égal à la durée de deux impulsions S, les signaux PLES et XLES étant dirigés vers le module d'analyse de forme (310).

20. Dispositif selon la revendication 18, caractérisé en ce qu'il comporte en outre un dispositif (303) d'analyse de la pente de Δ/Σ recevant les échantillons de Δ/Σ et comparant la valeur d'un échantillon suivant à celle d'un échantillon précédant et produisant un signal exprimant le résultat de la comparaison ce signal étant dirigé vers le dispositif d'analyse de forme (310) via la mémoire circulaire (302).

21. Dispositif selon la revendication 20, caractérisé en ce qu'il comporte en outre un convertisseur analogique numérique (250) recevant un signal dit fréquence Σ représentatif de la fréquence du signal reçu et alimentant d'une part un module (251) comparant la valeur d'un échantillon précédant à la valeur d'un échantillon suivant, le signal de sortie de la comparaison alimentant le circuit (310) d'analyse de forme via la mémoire circulaire (302) ; et d'autre part la mémoire circulaire de stockage (304).

22. Dispositif selon la revendication 18, caractérisé en ce qu'il comporte en outre

- un module sommateur (352) recevant le signal échantillonné LogΣ, les remises à zéro de ce module (352) étant commandées par un module de commande (351) recevant notamment les signaux LE, le module (352) produisant un signal dit LogΣSum représentatif d'une somme de plusieurs échantillons LogΣ et le module de commande produisant un signal dit NumSam représentatif du nombre d'échantillons additionnés par le dispositif de sommation (352), les dispositifs (351 et 352) alimentant une mémoire circulaire (354), un module (353) recevant également les signaux LE et élaborant un signal dit (nextLE) représentatif du nombre de période d'échantillonnage séparant deux signaux LE consécutifs, et en ce que les sorties du module (353) et de la mémoire circulaire (354) produisent un signal dit message d'impulsion renouvelé à la cadence d'échantillonnage.

23. Dispositif selon la revendication 20, caractérisé en ce qu'il comporte en outre :

- un module sommateur (352) recevant les signaux échantillonnés LogΣ, Δ/Σ, les remises à zéro ce module (352) étant commandées par un module de commande (351) recevant notamment les signaux LE, le module (352) produisant un signal dit LogΣSum représentatif d'une somme de plusieurs échantillons LogΣ et un signal Δ/ΣSum représentatif d'une somme de plusieurs échantillons Δ/Σ et le module de commande produisant un signal dit NumSam représentatif du nombre d'échantillons additionnés par le dispositif de sommation (352), pour chacun des signaux LogΣ et Δ/Σ les dispositifs (351 et 352) alimentant une mémoire circulaire (354), un module (353) recevant également les signaux LE et élaborant un signal dit (nextLE) représentatif du nombre de période d'échantillonnage séparant deux signaux LE consécutifs, et en ce que les sorties du module (353) et de la mémoire circulaire (354) produisent un signal dit message d'impulsion renouvelé à la cadence d'échantillonnage.

24. Dispositif selon la revendication 21, caractérisé en ce qu'il comporte en outre :

- un module sommateur (352) recevant les signaux échantillons LogΣ, Δ/Σ et le signal fréquenceΣ, les remises à zéro de ce module (352) étant commandées par un module de commande (351) recevant notamment les signaux LE, le module (352) produisant un signal dit LogΣSum représentatif d'une somme de plusieurs échantillons LogΣ, un signal Δ/ΣSum représentatif d'une somme de plusieurs échantillons Δ/Σ et un signal fréquence ΣSum représentatif d'une somme de plusieurs échantillons fréquence Σ et le module de commande produisant un signal dit NumSam représentatif du nombre d'échantillons additionnés par le dispositif de sommation (352), pour chacun des signaux LogΣ et Δ/Σ et fréquenceΣ les dispositifs (351 et 352) alimentant une mémoire circulaire (354), un module (353) recevant également les signaux LE et élaborant un signal dit (nextLE) représentatif du nombre de période d'échantillonnage séparant deux signaux LE consécutifs, et en ce que les sorties du module (353) et de la mémoire circulaire (354) produisent un signal dit message d'impulsion renouvelé à la cadence d'échantillonnage.

**25.** Dispositif selon l'une des revendications 18 à 24, caractérisé en ce qu'il comporte en outre un module (380) recevant les messages d'impulsions et un signal dit de détection des réponses secondaires, ce module (380) effectuant un filtrage des messages d'impulsions de chaque réponse détectée.

**26.** Dispositif selon la revendication 25, caractérisé en ce que le module (380) comporte une mémoire circulaire adressable (381) recevant en séquence les messages d'impulsion, un séquenceur (382) recevant des messages de détection, un dispositif (384) de calcul de valeur moyenne recevant à partir des adresses de la mémoire (381) déterminées par le séquenceur (382) des informations sur les impulsions et calculant à partir de ces informations des valeurs moyennes de références pour des grandeurs caractérisant une impulsion, un module (390) recevant les valeurs moyennes de référence en provenance du module (383) et des valeurs de ces mêmes grandeurs élaborées par un module (384) recevant des informations en provenance d'adresses déterminées par le séquenceur (382), pour chacune des impulsions de la réponse le module (390) comparant pour chaque grandeur la valeur moyenne de référence et la valeur en provenance du module (384) et éliminant le message d'impulsion si l'écart entre une valeur en provenance du module (384) et la valeur moyenne de référence correspondante est supérieur à un seuil prédéterminé.

**27.** Dispositif selon la revendication 26, caractérisé en ce que le module (390) comporte un module (386) d'ajustement des seuils commandé par une valeur en provenance du module (383).

**Patentansprüche**

**1.** Verfahren zur Echzeit-Vorverarbeitung von Signalen, die von einem Radar-Transponder ausgesendet werden, wobei die Signale der Transponder aus sogenannten S-Impulsfolgen und sogenannten Sekundär-Impulsfolgen gebildet sind, wobei die Impulse normierte Dauern und Abstände besitzen, wobei das Verfahren in einem Sekundärradar-Extraktor ausgeführt wird, der sich funktional hinter einem Empfänger befindet, der mit Schaltungen versehen ist, die anhand der empfangenen Signale analoge Größen, die zum Logarithmus der empfangenen Leistung proportional sind bzw. den Winkelabstand zur Antennenachse repräsentieren und in herkömmlicher Weise mit LogΣ, Δ/Σ bezeichnet werden, sowie eine digitale Größe QΣ, die den Wert 0 oder 1 annehmen kann, wobei der Übergang auf 1 dieser Größe der Hinweis auf das Vorliegen einer Impulsanstiegsflanke LE ist, und andere Größen erzeugen, wobei diese Größen anschließend durch Abtasten in einem sogenannten Abtasttakt in digitale Signale umgesetzt werden, wobei gemäß dem Verfahren:

a) der Abgriff der Abtastwerte der verschiedenen Größen durch dasselbe Taktsignal synchronisiert ist;
b) der Takt des Abtastens ausreichend hoch ist, damit während der Dauer des kürzesten normierten Impulses mehrere Abtastwerte abgegriffen werden; dadurch gekennzeichnet, daß:
c) der Wert eines eine Größe repräsentierenden folgenden Abtastwerts mit dem Wert eines vorhergehenden Abtastwerts derselben Größe verglichen wird, wobei das Vergleichsergebnis den Übergang auf 1 eines von mehreren Bits auf jedem der die Größen repräsentierenden Kanäle hervorruft, wobei jedes der Bits den Wert 1 annehmen kann und einen Steigungsbereich für die Änderung der Größe repräsentiert;
d) dann, wenn die Größe QΣ während einer Dauer, die länger als die Dauer eines normalen oder S-Impulses, erhöht um den Wert der Toleranzdauer und um das Zeitintervall zwischen zwei aufeinanderfolgenden Abtastwerten, ist, auf dem Wert 1 bleibt, Pseudo-Impulsanstiegsflanken PLE erzeugt werden;
e) die Weise untersucht wird, in der die Werte mit einem Bit, die im Schritt c erzeugt wurden, sich verändern, und ein sogenanntes Klarzonensignal CLZ mit einem Bit erzeugt wird, das den Wert 1 annimmt und ihn solange hält, wie diese Werte gleichzeitig auf Werten bleiben, die einen stabilen Zustand angeben, und ein sogenanntes Amalgam-Merkersignal PGF jedesmal dann erzeugt wird, wenn ein Wechsel erfaßt wird, der eine Veränderung der Steigung einer Größe angibt;

f) an spätere Verarbeitungsstufen eine sogenannte Abtastnachricht übertragen wird, wobei die Nachricht bei jedem Abtastwert erneuert wird und die Signale Q$\Sigma$, LE und PLE, PGF, CLZ mit einem Bit sowie die digitalen Werte der abgetasteten Größen mit mehreren Bits enthält.

2. Vorverarbeitungsverfahren nach Anspruch 1, dadurch gekennzeichnet, daß die verschiedenen Bits, die die Steigung der Änderung des Signals Log$\Sigma$ repräsentieren, in der Anzahl 5 vorliegen, wobei jeweils eines der Bits:

- eine Änderung mit positiver großer Steigung,
- eine Änderung mit positiver geringer Steigung,
- eine Änderung mit negativer geringer Steigung,
- eine Änderung mit negativer großer Steigung
- einen stabilen Zustand

repräsentiert, und daß nur ein Bit die Steigung von $\Delta/\Sigma$ repräsentiert, wobei dieses Bit den Wert 1 annimmt, falls $\Delta/\Sigma$ stabil ist, und den Wert 0 im entgegengesetzten Fall annimmt.

3. Verfahren nach Anspruch 2, dadurch gekennzeichnet, daß das den stabilen Zustand von Log$\Sigma$ repräsentierende Bit auf 1 übergeht und diesen Wert hält, solange wie die Pegeldifferenz zwischen einem folgenden Abtastwert und einem vorangehenden Abtastwert kleiner als ein im voraus festgelegter Schwellenwert ist, wobei der Schwellenwert zunehmende Werte besitzt, wenn Log$\Sigma$ abnimmt.

4. Verfahren nach einem der Ansprüche 1 bis 3, dadurch gekennzeichnet, daß die Pseudo-Impulsanstiegsflanken PLE auf zwei hierzu vorgesehenen Kanälen erzeugt werden, wobei ein Kanal Pseudoflanken PLE empfängt, die den Längen von sogenannten normalen Impulsen entsprechen, und ein Kanal Pseudoflanken PLES empfängt, die den Längen von S-Impulsen entsprechen, wobei die Abtastnachricht einen Kanal für die PLE und einen Kanal für die PLES enthält.

5. Verfahren nach Anspruch 4, dadurch gekennzeichnet, daß die Pseudoflanken bei einer Impulslänge vor der Abstiegsflanke des Signals Q$\Sigma$ erzeugt werden, wenn die Dauer von Q$\Sigma$ kleiner als die Dauer zweier Impulse ist, und hinter der Anstiegsflanke von Q$\Sigma$ in Zeitintervallen, die gleich der Dauer eines Impulses sind, und während der gesamten Dauer von Q$\Sigma$ erzeugt werden, wenn die Dauer des Signals Q$\Sigma$ größer als die Dauer zweier Impulse ist.

6. Verfahren zur Echtzeit-Vorverarbeitung nach einem der Ansprüche 1 bis 5, das in einem Extraktor ausgeführt wird, der sich hinter einem Empfänger befindet, der mit einer Schaltung zur Analyse der Frequenz der empfangenen Signale versehen ist, wobei die Schaltung eine Größe, die Frequenz$\Sigma$ genannt wird, erzeugt, die den Wert der Frequenz des empfangenen Signals repräsentiert, dadurch gekennzeichnet, daß das Klarzonensignal CLZ den Wert 1 nur annimmt, wenn die Werte von Log$\Sigma$, $\Delta/\Sigma$ und Frequenz$\Sigma$ stabil sind.

7. Verfahren nach einem der Ansprüche 5 oder 6, dadurch gekennzeichnet, daß die Position der Pseudo-Impulsanstiegsflanken nach dem Vergleich der Änderungen der Größen Log$\Sigma$, $\Delta/\Sigma$ und eventuell der Frequenz$\Sigma$ korrigiert wird.

8. Verfahren nach Anspruch 7, dadurch gekennzeichnet, daß die Informationen der aufeinanderfolgenden Abtastnachrichten, die sich in einer Zone befinden, in der der Wert des Klarzonensignals CLZ ununterbrochen den Wert 1 beibehält, verarbeitet werden, um eine sogenannte Impulsnachricht zu bilden.

9. Verfahren nach Anspruch 8, dadurch gekennzeichnet, daß die Impulsnachricht, jeweils mit einem Bit, enthält:

- eine LE genannte Größe, die eine Impulsanstiegsflanke repräsentiert,
- eine PLE genannte Größe, die eine berechnete Impulsanstiegsflanke repräsentiert,
- eine SVF genannte Größe, deren Wert 1 angibt, daß es nicht möglich gewesen ist, diesem Impuls Abtastwerte Log$\Sigma$, $\Delta/\Sigma$ mit mehreren Bits zuzuordnen,
- eine Log$\Sigma$sum genannte Größe, die die Summe der Log$\Sigma$Werte der Abtastnachrichten repräsentiert, die bei der Bildung der Impulsnachricht berücksichtigt werden;
- eine $\Delta/\Sigma$Sum genannte Größe, die die Summe der Werte $\Delta/\Sigma$ der Abtastnachrichten repräsentiert, die bei der Bildung der Impulsnachrichten berücksichtigt werden;
- eine NumSam genannte Größe, die die Anzahl von Abtastwerten repräsentiert, die bei der Bildung jeder Größe der Impulsnachricht berücksichtigt werden.

10. Verfahren nach Anspruch 9, dadurch gekennzeichnet, daß die Impulsnachrichten, in denen einer der Werte LE oder PLE gleich 1 ist, außerdem eine nextLE genannte Größe mit mehreren Bits enthalten, die die Dauer repräsentiert, an deren Ende eine neue Impulsanstiegsflanke vorliegt.

11. Verfahren nach Anspruch 10, das in einem Extraktor ausgeführt wird, in dem die Erfassung einer Antwort durch die Erfassung eines sogenannten Einrahmungsimpulspaars sichergestellt ist, wobei das Paar einen $F_1$ genannten ersten Impuls, der der erste Impuls der Folge ist, und einen zweiten Impuls $F_2$ enthält, der vom ersten Impuls um eine bekannte normierte Zeit getrennt ist, wobei in dem Verfahren jedem BPD genannten Erfassungssignal eine erste Größe mit einem Bit zugeordnet wird, das "Garbling"-1-Mutmaßungsbit BD1 genannt wird, das den Wert 1 annimmt, wenn nach der momentanen Antwort in einem Zeitintervall von dem ersten Impuls $F_1$, das kleiner als die maximale Dauer der eine Antwort bildenden Impulsfolge ist, eine andere Antwort erfaßt worden ist, und eine zweite Größe mit einem Bit zugeordnet wird, die "Garbling"-2-Mutmaßungsbit BD2 genannt wird, das den Wert 1 annimmt, wenn vor der momentanen Antwort in einem Zeitintervall, das kleiner als die maximale Dauer der eine Antwort bildenden Impulsfolge ist, eine andere Antwort erfaßt worden ist, dadurch gekennzeichnet, daß die Werte $\frac{Log\,\Sigma\,Sum}{NumSam}$ des Impulses F1 und des Impulses $F_2$ voneinander subtrahiert werden und daß ein Zweifelbit BD7 ausgesendet wird, das die Antwort charakterisiert und den Wert 1 annimmt, wenn die Differenz größer als ein vorgegebener Schwellenwert ist.

12. Verfahren nach Anspruch 11, dadurch gekennzeichnet, daß außerdem die Werte $\frac{\Delta\Sigma Sum}{NumSam}$ des Impulses $F_1$ und des Impulses $F_2$ voneinander subtrahiert werden und daß ein Zweifelbit BD6 ausgesendet wird, das die Antwort charakterisiert und den Wert 1 annimmt, wenn die Differenz größer als ein vorgegebener Schwellenwert ist.

13. Verfahren nach Anspruch 12, das in einem Extraktor ausgeführt wird, der sich hinter einem Empfänger befindet, der mit einer Schaltung zur Analyse der Frequenz der empfangenen Signale versehen ist, dadurch gekennzeichnet, daß die Werte $\frac{Frequenz\Sigma Sum}{NumSam}$ des Impulses $F_1$ und des Impulses $F_2$ voneinander subtrahiert werden und daß ein Zweifelbit BD5 ausgesendet wird, das die Antwort charakterisiert und den Wert 1 annimmt, wenn die Differenz größer als ein vorgegebener Schwellenwert ist.

14. Verfahren nach Anspruch 11, dadurch gekennzeichnet, daß ein Mittelwert von LogΣ gebildet wird:

- über $F_1$ und $F_2$, falls die Impulsnachrichten für $F_1$ und $F_2$ verfügbar sind und falls BD7 den Wert 0 hat;

- nur über $F_1$, falls BD7 gleich 1 ist und BD1 gleich 1 ist oder falls BD7 den Wert 1 hat und die beiden Zweifelbits BD1 und BD2 den Wert 0 haben;

- nur über $F_2$, falls BD7 gleich 1 ist und BD2 gleich 1 ist,

und daß entschieden wird, daß die Antwort eine Phantomantwort ist, falls BD7 gleich 1 ist und BD1 und BD2 gleich 1 sind.

15. Verfahren nach Anspruch 12, dadurch gekennzeichnet, daß ein Mittelwert von $\Delta/\Sigma$ und von FrequenzΣ gebildet wird:

- über $F_1$ und $F_2$, falls Impulsnachrichten über $F_1$ und $F_2$ verfügbar sind und falls die logische Summe (BD5 + BD6) den Wert 0 hat;

- nur über $F_1$, falls die logische Summe (BD5 + BD6) gleich ist und BD1 gleich ist oder falls die logische Summe (BD5 + BD6) den Wert 1 hat und die beiden Zweifelbits BD1 und BD2 den Wert 0 haben;

- nur über $F_2$, falls die logische Summe (BD5 + BD6) gleich 1 ist und BD2 gleich ist und daß entschieden wird, daß die Antwort eine Phantomantwort ist, falls die logische Summe (BD5 + BD6) gleich 1 ist und BD1 und BD2 gleich 1 sind.

16. Verfahren nach Anspruch 13, dadurch gekennzeichnet, daß ein Mittelwert von LogΣ, $\Delta/\Sigma$ und FrequenzΣ gebildet wird:

- über $F_1$ und $F_2$, falls Impulsnachrichten über $F_1$ und $F_2$ verfügbar sind und falls die logische Summe (BD5 + BD6 + BD7) den Wert 0 hat;

- nur über $F_1$, falls die logische Summe (BD5 + BD6 + BD7) gleich 1 ist und BD1 gleich 1 ist oder falls die logische Summe (BD5 + BD6 + BD7) den Wert 1 hat und die beiden Zweifelbits BD1 und BD2 den Wert 0 haben;

- nur über $F_2$, falls die logische Summe (BD5 + BD6 + BD7) gleich 1 ist und BD2 gleich 1 ist,

und daß entschieden wird, daß die Antwort eine Phantomantwort ist, falls die logische Summe (BD5 + BD6 + BD7) gleich 1 ist und BD1 und BD2 gleich 1 sind.

17. Verfahren nach einem der Ansprüche 14 bis 16, dadurch gekennzeichnet, daß, falls BD den Wert 1 hat, jedem der letzten Impulse, die aufgrund ihrer Position als Bestandteil der Antwort angesehen werden, ein Zweifelbit BD3, BD4 zugeordnet wird, wobei dieses Bit den Wert 1 annimmt, falls sich dieser Impuls in dem Zeitintervall befindet, in dem die folgende Antwort vorliegen kann, und daß, falls BD2 den Wert 1 hat, jedem der ersten Impulse, die aufgrund ihrer Position als Bestandteil der Antwort angesehen werden, ein Zweifelbit BD5 zugeordnet wird, wobei dieses Bit den Wert 1 annimmt, wenn dieser Impuls sich in dem Zeitintervall befindet, in dem die vorhergehende Antwort vorliegen kann, und daß der Wert wenigstens einer der Größen $Log\Sigma$, $\Delta/\Sigma$, Frequenz$\Sigma$ jedes Impulses, der aufgrund seiner Position zur erfaßten Antwort gehört, mit dem entsprechenden Mittelwert der Antwort verglichen wird und daß ein Vertrauensbit BC7 für $Log\Sigma$, BC6 für $\Delta/\Sigma$ und BC5 für Frequenz$\Sigma$ ausgesendet wird, wobei dieses Bit den Wert 1 annimmt, falls die Differenz zwischen dem Impulswert und dem Mittelwert größer als ein vorgegebener Schwellenwert ist, und daß der Impuls aus der Antwort beseitigt wird, falls eines der Zweifelbits BD4 oder BD3 den Wert 1 hat und falls die logische Summe (BC4 + BC5 + BC6) den Wert 1 hat.

18. Vorrichtung zur Echtzeit-Vorverarbeitung eines Antwortsignals eines Radar-Transponders, wobei das Signal des Transponders aus sogenannten S-Impulsfolgen und sogenannten Sekundär-Impulsfolgen gebildet ist, wobei die Impulse normierte Dauern und Abstände besitzen, wobei sich die Vorrichtung funktional hinter Schaltungen befinden, die anhand von empfangenen Signalen analoge Signale, die zum Logarithmus der empfangenen Leistung proportional sind bzw. den Winkelabstand zur Antennenachse repräsentieren und in herkömmlicher Weise mit $Log\Sigma$, $\Delta/\Sigma$ bezeichnet werden, sowie weitere Signale und ein digitales Signal $Q\Sigma$ erzeugen, das den Wert 0 oder 1 annehmen kann, wobei der Übergang auf 1 dieses Signals der Hinweis auf das Vorhandensein einer Impulsanstiegsflanke LE ist, wobei die Vorrichtung in einer ersten Verarbeitungslinie enthält:

- Umsetzer (100, 200), die die analogen Signale $Log\Sigma$ und $\Delta/\Sigma$ empfangen und sie in digitale Signale mit einer sogenannten Abtastfrequenz umsetzen; dadurch gekennzeichnet daß sie enthält:
- eine Schaltung (301), die die abgetasteten Signale $Log\Sigma$ und $\Delta/\Sigma$ empfängt und einen Vergleich zwischen den Werten des vorhergehenden Abtastwerts und des momentanen Abtastwerts ausführt und auf einem hierzu vorgesehenen Kanal eines mehrere Kanäle umfassenden Busses ein SLOPE $Log\Sigma$ und $\Delta/\Sigma$ genanntes Signal mit einem Bit erzeugt, wobei der ausgewählte Kanal vom Ergebnis des Vergleichs abhängt;
- einen Umlaufspeicher (302), der in dem von der Schaltung (301) stammenden Abtasttakt eine Nachricht empfängt, die mehrere Bits enthält, wovon nur eines den Wert 1 hat;

- in einer zweiten Verarbeitungslinie ein Modul (306), das die Abtastwerte des Wertes des Signals $Q\Sigma$ empfängt und ein Signal PLE erzeugt, falls $Q\Sigma$ während einer Dauer, die wenigstens gleich der maximalen Dauer eines Impulses, erhöht um die Unsicherheit aufgrund der Abtastung, auf dem Wert 1 bleibt, sowie eine Schaltung (307), die die Abtastwerte des Signals $Q\Sigma$ empfängt und ein sogenanntes XLE-Signal erzeugt, falls $Q\Sigma$ während einer Dauer, die größer als die Dauer zweier Impulse ist, den Wert 1 beibehält, wobei die erste und die zweite Linie eine sogenannte Formanalyseschaltung (310) speisen,

- in einer dritten Verarbeitungslinie einen Umlaufspeicher (304) enthält, der die Signale $Log\Sigma$ und $\Delta/\Sigma$ empfängt, wobei die Formanalyseschaltung (310) und der Umlaufspeicher (304) mit der Abtastfrequenz eine sogenannte Abtastnachricht liefern, wobei die Nachricht die Signale $Q\Sigma$, LE und PLE, ein Klarzonen-Signal CLZ, das den Wert 1 annimmt und ihn solange beibehält, wie die Signale $Log\Sigma$ und $\Delta/\Sigma$ gleichzeitig auf Werten bleiben, die einen stabilen Zustand angeben, sowie jedesmal, wenn eine eine Änderung der Steigung der Signale angebende Änderung erfaßt wird, ein Amalgam-Merkersignal PGF jeweils mit einem Bit und die digitalen Werte der abgetasteten Signale mit mehreren Bits enthält.

19. Vorrichtung nach Anspruch 18, dadurch gekennzeichnet, daß sie außerdem ein Modul (308), das das Signal $Q\Sigma$ empfängt und ein Signal PLES erzeugt, falls $Q\Sigma$ während einer Zeit, die größer als die Dauer eines S-Impulses ist, auf dem Wert 1 bleibt, sowie ein Modul (309) enthält, das das Signal $Q\Sigma$ empfängt und ein Signal XLES erzeugt, falls $Q\Sigma$ während einer Dauer, die wenigstens gleich der Dauer zweier S-Impulse ist, auf dem Wert 1 bleibt, wobei die Signale PLES und XLES an das Formanalysemodul (310) gerichtet werden.

20. Vorrichtung nach Anspruch 18, dadurch gekennzeichnet, daß sie außerdem eine Vorrichtung (330) zur Analyse der Steigung von $\Delta/\Sigma$ enthält, die die Abtastwerte von $\Delta/\Sigma$ empfängt und den Wert eines folgenden Abtastwerts mit jenem eines vorangehenden Abtastwerts vergleicht und ein Signal erzeugt, das das Vergleichsergebnis ausdrückt, wobei dieses Signal über den Umlaufspeicher (302) zur Formanalysevorrichtung (310) geleitet wird.

21. Vorrichtung nach Anspruch 20, dadurch gekennzeichnet, daß sie außerdem einen Analog/Digital-Umsetzer (250) enthält, der ein Frequenz$\Sigma$ genanntes Signal empfängt, das die Frequenz des empfangenen Signals repräsentiert und einerseits einem Modul (251) zugeführt wird, das den Wert eines vorhergehenden Abtastwerts mit dem Wert eines folgenden Abtastwerts vergleicht, wobei das Ausgangssignal des Vergleichs über den Umlaufspeicher 302 der Formanalyseschaltung (310) zugeführt wird; und das andererseits dem Umlaufspeicher (304) zugeführt wird.

22. Vorrichtung nach Anspruch 18, dadurch gekennzeichnet, daß sie außerdem enthält:

- ein Summationsmodul (352), das das abgetastete Signal LogΣ empfängt, wobei die Rücksetzungen auf null dieses Moduls (352) durch ein Steuermodul (351) gesteuert werden, das insbesondere die Signale LE empfängt, wobei das Modul (352) ein LogΣSum genanntes Signal erzeugt, das eine Summe aus mehreren Abtastwerten LogΣ repräsentiert, und das Steuermodul ein NumSam genanntes Signal erzeugt, das die Anzahl von von der Summationsvorrichtung (352) addierten Abtastwerten repräsentiert, wobei die Vorrichtungen (351 und 352) einen Umlaufspeicher (354) speisen, und ein Modul (353), das ebenfalls die Signale LE empfängt und ein (nextLE) genanntes Signal bildet, das die Anzahl von Abtastperioden repräsentiert, die zwei aufeinanderfolgende Signale LE trennen, und daß die Ausgänge des Moduls (353) und des Umlaufspeichers (354) ein Impulsnachricht genanntes Signal erzeugen, das im Abtasttakt erneuert wird.

23. Vorrichtung nach Anspruch 20, dadurch gekennzeichnet, daß sie außerdem enthält:

- ein Summationsmodul (352), das die abgetasteten Signale LogΣ, Δ/Σ empfängt, wobei die Rücksetzungen auf null dieses Moduls (352) durch ein Steuermodul (351) gesteuert werden, das insbesondere die Signale LE empfängt, wobei das Modul (352) ein LogΣsum genanntes Signal, das eine Summe aus mehreren Abtastwerten LogΣ repräsentiert, sowie ein Signal Δ/ΣSum erzeugt, das eine Summe aus mehreren Abtastwerten Δ/Σ repräsentiert, und wobei das Steuermodul ein NumSam genanntes Signal erzeugt, das die Anzahl der von der Summationsvorrichtung (352) für jedes der Signale LogΣ und Δ/Σ addierten Abtastwerte repräsentiert, wobei die Vorrichtungen (351 und 352) einen Umlaufspeicher (354) versorgen, sowie ein Modul (353), das ebenfalls die Signale LE empfängt und ein (nextLE) genanntes Signal bildet, das die Anzahl von Abtastperioden repräsentiert, die zwei aufeinanderfolgende Signale LE trennen, und daß die Ausgangssignale des Moduls (353) und des Umlaufspeichers (354) ein sogenanntes Impulsnachricht-Signal erzeugen, das im Abtasttakt erneuert wird.

24. Vorrichtung nach Anspruch 21, dadurch gekennzeichnet, daß sie außerdem enthält:

- ein Summationsmodul (352), das die Abtastwertsignale LogΣ, Δ/Σ und das Signal Frequenz Σ empfängt, wobei die Rücksetzungen auf null dieses Moduls (352) durch ein Steuermodul (351) gesteuert werden, das insbesondere die Signale LE empfängt, wobei das Modul (352) ein LogΣSum genanntes Signal, das eine Summe aus mehreren Abtastwerten LogΣ repräsentiert, ein Signal Δ/ΣSum, das eine Summe aus mehreren Abtastwerten Δ/Σ repräsentiert, sowie ein Signal FrequenzΣSum erzeugt, das eine Summe aus mehreren Abtastwerten FrequenzΣ repräsentiert, und das Steuermodul ein NumSam genanntes Signal erzeugt, das die Anzahl der von der Summationsvorrichtung (352) für jedes der Signale LogΣ und Δ/Σ und FrequenzΣ addierten Abtastwerten repräsentiert, wobei die Vorrichtungen (351 und 352) einen Umlaufspeicher (354) speisen, sowie ein Modul (353), das ebenfalls die Signale LE empfängt und ein (nextLE) genanntes Signal erzeugt, das die Anzahl von Abtastperioden repräsentiert, die zwei aufeinanderfolgende Signale LE trennen, und daß die Ausgangssignale des Moduls (353) und des Umlaufspeichers (354) ein Impulsnachricht genanntes Signal erzeugen, das im Abtasttakt erneuert wird.

25. Vorrichtung nach einem der Ansprüche 18 bis 24, dadurch gekennzeichnet, daß sie außerdem ein Modul (380) enthält, das die Impulsnachrichten und ein sogenanntes Sekundärantwort-Erfassungssignal empfängt, wobei dieses Modul (380) eine Filterung der Impulsnachrichten jeder erfaßten Antwort ausführt.

26. Vorrichtung nach Anspruch 25, dadurch gekennzeichnet, daß das Modul (380) einen adressierbaren Umlaufspeicher (381), der nacheinander die Impulsnachrichten empfängt, eine Ablaufsteuerung (382), die die Erfassungsnachrichten empfängt, eine Mittelwertberechnungsvorrichtung (384), die anhand der Adressen des Speichers (381), die durch die Ablaufsteuerung (382) bestimmt werden, Informationen über die Impulse empfängt und anhand dieser Informationen Referenz-Mittelwerte für die einen Impuls kennzeichnenden Größen berechnet, ein Modul (390), das die vom Modul (383) stammenden Referenzmittelwerte und Werte derselben Größen, die von einem Modul (384) gebildet werden, das Informationen von von der Ablaufsteuerung (382) bestimmten Adressen empfängt, für jeden der Impulse der Antwort empfängt, wobei das Modul (390) für jede Größe den Referenzmittelwert und den vom Modul (384) stammenden Wert vergleicht und die Impulsnachricht beseitigt, falls der Abstand zwischen einem vom Modul (384) stammenden Wert und dem entsprechenden Referenzmittelwert größer als ein vorgegebener Schwellenwert ist.

27. Vorrichtung nach Anspruch 26, dadurch gekennzeichnet, daß das Modul (390) ein Modul (386) zum Einstellen von Schwellenwerten enthält, das durch einen vom Modul (383) stammenden Wert gesteuert wird.

## Claims

1. Method of real-time preprocessing of signals transmitted by a radar transponder, the signals from the transponders consisting of pulse trains denoted S and denoted secondary, the pulses having standardized durations and spacings, the method being implemented in a secondary radar extractor located functionally downstream of a receiver provided with circuits which, on the basis of the signals received, produce analogue quantities proportional to the logarithm of the received power and representative of the angular separation from the axis of the antenna, respectively, conventionally denoted to $\text{Log}\Sigma$, $\Delta/\Sigma$ and a digital quantity $Q\Sigma$ which can take the value 0 or 1, a change of this value to 1 being indicative of the presence of a pulse leading edge LE, and other quantities, these quantities then being converted into digital signals by sampling at a rate referred to as the sampling rate, according to which method:

   a) the sampling of the various quantities is synchronized by a common clock signal;
   b) the sampling rate is high enough for a plurality of samples to be taken during the shortest standardized pulse duration; and characterized in that:
   c) the value of a subsequent sample representing a quantity as compared with the value of a preceding sample of the said quantity, the result of the comparison causing one of a plurality of bits to change to 1, on each of the channels representing the said quantities, each of the bits being capable of taking the value 1 and being representative of a range of variation slope for the quantity;
   d) if the quantity $Q\Sigma$ remains at the value 1 for a time greater than the duration of one normal or S pulse, augmented by the value of the tolerance duration and the time interval between two successive samples, pulse pseudo-leading edges PLE are generated;

   e) examinations of the way in which the one-bit values created in step c vary are carried out, and, over one bit, a so-called clear zone signal CLZ is created, which takes the value 1 and keeps it so long as these values remain simultaneously at values indicating a stable state, and a so-called garbling flag signal PGF is created each time a change indicating a variation in the slope of a quantity is detected;
   f) a so-called sampling message is sent to subsequent processing stages, the message being updated at each sample, the message including, over one bit, the signals $Q\Sigma$, LE and PLE, PGF, CLZ and, over a plurality of bits, the digital values of the sampled quantities.

2. Preprocessing method according to Claim 1, characterized in that the various bits representative of the variation slope of the signal $\text{Log}\Sigma$ are 5 in number, each of the bits being respectively representative of:

   - a variation with steep positive slope
   - a variation with gentle positive slope
   - a variation with gentle negative slope
   - a variation with steep negative slope
   - a stable state

   and in that there is only one bit representative of the slope of $\Delta/\Sigma$, this bit having the value 1 if $\Delta/\Sigma$ is stable and the value 0 in the converse case.

3. Method according to Claim 2, characterized in that the bit representative of the stable state of $\text{Log}\Sigma$ changes to 1 and keeps this value for as long as the difference in level between a subsequent sample and the preceding sample is less than a pre-set threshold, the threshold having increasing values as $\text{Log}\Sigma$ decreases.

4. Method according to one of Claims 1 to 3, characterized in that the pulse pseudo-leading edges PLE are generated on two dedicated channels, one channel receiving the pseudo-edges corresponding to so-called normal pulse lengths PLE and one channel receiving pseudo-edges corresponding to S pulse lengths PLES, the sample message including one channel for the PLEs and one channel for the PLESs.

5. Method according to Claim 4, characterized in that the pseudo-edges are generated one pulse length in front of the trailing edge of the signal $Q\Sigma$ if the duration of $Q\Sigma$ is less than the duration of two pulses, and behind the leading edge of $Q\Sigma$ at time intervals equal to the duration of one pulse and throughout the duration of $Q\Sigma$ if the duration of the signal $Q\Sigma$ is greater than the duration of two pulses.

6. Real-time preprocessing method according to one of Claims 1 to 5, implemented in an extractor located downstream of a receiver provided with a circuit for analysing the frequency of the received signals, the circuit creating a quantity referred to as frequency$\Sigma$ representative of the value of the frequency of the received signal, characterized in that the clear zone signal CLZ takes the value 1 only if the values of Log$\Sigma$, $\Delta/\Sigma$ and frequency$\Sigma$ are stable.

7. Method according to one of Claims 5 and 6, characterized in that the position of the pulse pseudo-leading edges is corrected, after comparing the variations in the quantities Log$\Sigma$, $\Delta/\Sigma$ and optionally frequency$\Sigma$.

8. Method according to Claim 7, characterized in that the information of the consecutive sample messages located in a zone in which the value of the clear zone signal CLZ continuously keeps the value 1 is processed in order to constitute a so-called pulse message.

9. Method according to Claim 8, characterized in that, over one bit, the pulse message includes

   - a quantity denoted LE representative of a pulse leading edge
   - a quantity denoted PLE representative of a calculated pulse leading edge
   - a quantity denoted as SVF, of which the value 1 indicates that it has not been possible to assign samples Log$\Sigma$, $\Delta/\Sigma$ to this pulse and, over a plurality of bits,
   - a quantity called Log$\Sigma$Sum representing the sum of the Log$\Sigma$ values of the sample messages taken into account to establish the pulse message;
   - a quantity called $\Delta/\Sigma$Sum representing the sum of the $\Delta/\Sigma$ values of the sample messages taken into account to establish the pulse message;
   - a quantity called NumSam representing the number of samples taken into account to establish each quantity of the pulse message.

10. Method according to Claim 9, characterized in that the pulse messages in which one of the values LE or PLE is equal to 1 furthermore have, over a plurality of bits, a quantity called Next LE representative of the time at the end of which a new pulse leading edge is present.

11. Method according to Claim 10, implemented in an extractor in which a response is detected by detecting a pair of so-called framing pulses, the pair including a first pulse denoted F1 which is the first in the train and a second pulse F2, separated by a known standardized time from the first pulse, and in which each detection signal denoted BPD is associated with a first quantity on one bit, denoted the garbling presumption bit 1 BD1 which takes the value 1 if another response has been detected after the current response at a time interval after the first pulse F1 which is less than the maximum duration of the pulse train constituting a response, and with a second quantity on one bit, called garbling presumption bit 2 BD2 which takes the value 1 if another response has been detected before the current response at a time interval which is less than the maximum duration after a pulse train constituting a response, characterized in that the values $\frac{Log\ \Sigma\ Sum}{NumSam}$ of the pulse F1 and of the pulse F2 are subtracted from one another and in that a doubt bit BD7 characterizing the response is transmitted, taking the value 1 if the difference is greater than a predetermined threshold.

12. Method according to Claim 11, characterized in that the values $\frac{\Delta/\Sigma\ SUM}{NumSam}$ of the pulse F1 and of the pulse F2 are furthermore subtracted from one another, and in that a doubt bit BD6 characterizing the response is transmitted, taking the value 1 if the difference is greater than a predetermined threshold.

13. Method according to Claim 12, implemented in an extractor located downstream of a receiver provided with a circuit for analysing the frequency of the received signals, characterized in that the values

$$\frac{\mathbf{frequency}\Sigma\sum}{\mathbf{NumSam}}$$

of the pulse F1 and of the pulse F2 are subtracted from one another, and that a doubt bit BD5 characterizing the response is transmitted, taking the value 1 if the difference is greater than a predetermined threshold.

14. Method according to Claim 11, characterized in that a mean value of Log$\Sigma$ is established:

   - on $F_1$ and $F_2$, if pulse messages are available on $F_1$ and $F_2$, if BD7 has the value 0:
   - on F1 only if BD7 is equal to 1 and BD1 is equal to 1 or if BD7 has the value 1 and the two doubt bits BD1 and BD2 have the value 0;
   - on F1 only if BD7 is equal to 1 and BD2 is equal to 1 and in that a decision is made that the response is a phantom response if BD7 is equal to 1 and BD1 and BD2 are equal to 1.

15. Method according to Claim 12, characterized in that a mean value of $\Delta/\Sigma$ and frequency$\Sigma$ is established:
- on F1 and F2; if pulse messages are available on F1 and F2 if the logic sum (BD5 + BD6) has the value 0;

- on F1 only if the logic sum (BD5 + BD6) is equal to 1 and BD1 is equal to 1 or if the logic sum (BD5 + BD6) has the value 1 and the two doubt bits BD1 and BD2 have the value 0;
- on F2 only if the logic sum (BD5 + BD6) is equal to 1 and BD2 is equal to 1 and in that a decision is made that the response is a phantom response if the logic sum (BD5 + BD6) is equal to 1 and BD1 and BD2 are equal to 1.

16. Method according to Claim 13, characterized in that a mean value of $\text{Log}\Sigma$, $\Delta/\Sigma$ and frequency$\Sigma$ is established:

- on $F_1$ and $F_2$; if pulse messages are available on $F_1$ and $F_2$ if the logic sum (BD5 + BD6 + BD7) has the value 0;
- on $F_1$ only if the logic sum (BD5 + BD6 + BD7) is equal to 1 and BD1 is equal to 1 or if the logic sum (BD5 + BD6 + BD7) has the value 1 and the two doubt bits BD1 and BD2 have the value 0;
- on $F_2$ only if the logic sum (BD5 + BD6 + BD7) is equal to 1 and BD2 is equal to 1 and in that a decision is made that the response is a phantom response if the logic sum (BD5 + BD6 + BD7) is equal to 1 and BD1 and BD2 are equal to 1.

17. Method according to one of Claims 14 to 16, characterized in that if BD has the value 1, a doubt bit BD3, BD4 is assigned to each of the last pulses considered, by virtue of their position, as forming part of the response, this bit taking the value 1 if this pulse lies in the time interval in which the next response may be present, and in that, if BD2 has the value 1, a doubt bit BD5 is assigned to each of the first pulses considered, by virtue of their position, as forming part of the response, this bit taking the value 1 if this pulse lies in the time interval in which the preceding response may be present, and in that the value of at least one of the quantities $\text{Log}\Sigma$, $\Delta/\Sigma$, frequency$\Sigma$ of each pulse which, by virtue of its position, belongs to the detected response, is compared with the corresponding mean value of the response, and in that a confidence bit BC7 for $\text{Log}\Sigma$, BC6 for $\Delta/\Sigma$ and BC5 for frequency$\Sigma$ is transmitted, this bit taking the value 1 if the difference between the value of the pulse and the mean value is greater than a predetermined threshold, and in that the pulse is eliminated from the response if one of the doubt bits BD4 or BD3 has the value 1 and if the logic sum (BC4 + BC5 + BC6) has the value 1.

18. Device for real-time preprocessing of a signal transmitted by a radar transponder, the signal from the transponder consisting of pulse trains denoted S and denoted secondary, the pulses having standardized durations and spacings, the device being located functionally downstream of circuits which, on the basis of signals received, produce analogue signals proportional to the logarithm of the received power and representative of the angular separation from the axis of the antenna, respectively, conventionally denoted $\text{Log}\Sigma$, $\Delta/\Sigma$ and other signal and a digital signal Q$\Sigma$ which can take the value 0 or 1, a change of this signal to 1 being indicative of the presence of a pulse leading edge LE, which includes, on a first processing line:

- convertors (100, 200) which receive the analogue signals $\text{Log}\Sigma$ and $\Delta/\Sigma$, and convert them into digital signals at a so-called sampling frequency; characterized in that it includes:
- a circuit (301) which receives the sampled signals $\text{Log}\Sigma$ and $\Delta/\Sigma$ and makes a comparison of the values of the preceding sample and the value of the current sample and produces a signal over one bit, denoted slope $\text{Log}\Sigma$ and $\Delta/\Sigma$, on a dedicated channel of a bus having a plurality of channels, the selected channel depending on the result of the comparison;
- a cyclic memory (302) which receives, at the sampling rate, and from the ciruit (301), a message including a plurality of bits, of which only one has the value 1
- on a second processing line, a module (306) which receives the samples of the value of the signal Q$\Sigma$ and develops a signal PLE if Q$\Sigma$ remains at the value 1 for a time at least equal to the maximum duration of a pulse augmented by the uncertainty due to the sampling, and a circuit (307) which receives the samples of the signal Q$\Sigma$ and develops a signal denoted XLE if Q$\Sigma$ keeps the value 1 for a time greater than the duration of two pulses, the first and second lines feeding a circuit (310) denoted shape analysis,
- on a third processing line, a cyclic memory (304) which receives the signals $\text{Log}\Sigma$ and $\Delta/\Sigma$, the shape analysis circuit (310) and the circular memory (304) delivering a so-called sample message at the sampling frequency, the message including, over one bit, the signals Q$\Sigma$, LE and PLE, a clear zone signal CLZ which takes the value 1 and keeps it so long as the signals $\text{Log}\Sigma$ and $\Delta/\Sigma$ remain simultaneously at values indicating a stable state, and a garbling flag signal PGF each time a change is detected indicating a variation in slope of the said signals, and, over a plurality of bits, the digital values of the sampled signals.

**19.** Device according to Claim 18, characterized in that it furthermore includes a module (308) which receives the signal QΣ and develops a signal PLES if QΣ remains at the value 1 for a time greater than the duration of an S pulse, a module (309) which receives the signal QΣ and develops a signal XLES if QΣ remains at the value 1 for a time at least equal to the duration of two S pulses, the signals PLES and XLES being sent to the shape analysis module (310).

**20.** Device according to Claim 18, characterised in that it furthermore includes a device (303) for analysing the slope of Δ/Σ, which receives the samples of Δ/Σ and compares the value of a subsequent sample with that of a preceding sample and produces a signal expressing the result of the comparison, this signal being sent to the shape analysis device (310) via the cyclic memory (302).

**21.** Device according to Claim 20, characterized in that it furthermore includes an analogue-digital convertor (250) which receives a signal denoted frequencyΣ representative of the frequency of the received signal and feeds, on the one hand, a module (251) comparing the value of a preceding sample with the value of a subsequent sample, the output signal of the comparison feeding the shape analysis circuit (310) via the circular memory (302); and, on the other hand, the storage cyclic memory (304).

**22.** Device according to Claim 18, characterized in that it furthermore includes

- a summator module (352) which receives the sampled signal LogΣ, the resets of this module (352) being prompted by a control module (351) which, in particular, receives the signals LE, the module (352) producing a signal denoted LogΣSum representative of a plurality of samples LogΣ, and the control module producing a signal denoted NumSam representative of the number of samples added by the summation device (352), the devices (351 and 352) feeding a cyclic memory (354), a module (353) which also receives the signals LE and develops a signal denoted (nextLE) representative of the sampling period number separating two consecutive signals LE, and in that the outputs of the module (353) and of the cyclic memory (354) produce a signal denoted pulse message which is updated at the sampling rate.

**23.** Device according to Claim 20, characterized in that it furthermore includes:

- a summator module (352) which receives the sampled signals LogΣ, Δ/Σ, the resets of this module (352) being prompted by a control module (351) which, in particular, receives the signals LE, the module (352) producing a signal denoted LogΣSum representative of a sum of a plurality of samples LogΣ and a signal Δ/ΣSum representative of a sum of a plurality of samples Δ/Σ and the control module producing a signal denoted NumSam representative of the number of samples added by the summation device (352), for each signal LogΣ and Δ/Σ the devices (351 and 352) feeding a cyclic memory (354), a module (353) which also receives the signals LE and develops a signal denoted (nextLE) representative of the sampling period number separating two consecutive signals LE, and in that the outputs of the module (353) and of the cyclic memory (354) produce a signal denoted pulse message which is updated at the sampling rate.

**24.** Device according to Claim 21, characterized in that it furthermore includes:

- a summator module (352) which receives the sample signals LogΣ, Δ/Σ and the signal frequencyΣ, the resets to zero of this module (352) being instigated by a control module (351) which, in particular, receives the signals LE, the module (352) producing a signal denoted LogΣSum representative of a sum of a plurality of samples LogΣ and a signal Δ/ΣSum representative of a sum of a plurality of samples Δ/Σ and a signal frequencyΣSum representative of a sum of a plurality of samples of frequencyΣ and the control module producing a signal denoted NumSam representative of the number of samples added by the summation device (352), the devices (351 and 352) feeding, for each of the signals LogΣ and Δ/Σ and frequencyΣ, a cyclic memory (354), a module (353) which also receives the signals LE and developing a signal denoted (nextLE) representative of the sampling period number separating two consecutive signals LE, and in that the outputs of the module (353) and of the cyclic memory (354) produce a signal denoted pulse message which is updated at the sampling rate.

**25.** Device according to one of Claims 18 to 24, characterized in that it furthermore includes a module (380) which receives the pulse messages and a signal denoted detection of the secondary responses, this module (380) carrying out filtering of the pulse messages of each response detected.

**26.** Device according to Claim 25, characterized in that the module (380) includes an addressable cyclic memory (381) which receives the pulse messages in sequence, a sequencer (382) which receives the detection messages, a mean-value calculation device (384) which, on the basis of the addresses in the memory (381) which are determined by the sequencer (382), receives information relating to the pulses and, on the basis of this information, calculates reference mean values for quantities characterizing a pulse, a module (390) which receives the reference mean values from the module (383) and values of these same quantities, developed by a module (384) which receives information from addresses determined by the sequencer (382), and for each of the pulses of the response, the module (390) comparing, for each quantity, the reference mean value and the value from the module (384), and eliminating the pulse message if the discrepancy between a value from the module (384) and the corresponding reference mean value is greater than a predetermined threshold.

27. Device according to Claim 26, characterized in that the module (390) includes a threshold-adjustment module (386) controlled by a value from the module (383).

# FIG.1a

préambule 8.0 µs ± 0,05

bloc de données 112 µs

réponse longue

bloc de données 56 µs

réponse courte

# FIG.1b

Bit

Bit

Bit

1 2 3 4 5 53 54 55 56 57 58 59 60 61 111 112

0,5 µs ± 0.05

1 µs ± 0.05

3,5 µs ± 0.05

8 µs ± 0.05

0 0 1 0 0 0 0 1 0 1 0 0 1 1 1 1

# FIG.1c

EP 0 577 479 B1

0,45 µs ± 0,1

100 %

90 %

50 %

50 ns à 100 ns

## FIG.2a

$F_1$  $C_1$  $A_1$  $C_2$  $A_2$  $C_4$  $A_4$  X  $B_1$  $D_1$  $B_2$  $D_2$  $B_4$  $D_4$  $F_2$  SPI

1,45µs

1000  2000  4000

10,15 µs

4,35 µs

20,3 µs ± 0,1

## FIG.2b

Réponse de A

Réponse de B

Signal reçu

## FIG. 3a

Réponse de A

Réponse de B

Signal reçu

## FIG. 3b

EP 0 577 479 B1

FIG.4a

FIG.4b

PLE détecté
par changement de pente

ou

PLE généré
à partir du
front AR

et

ou

PLE
corrigé

FIG.4c

FIG.4d

600ns

FIG.4e

Synthèse des règles d'élaboration des références de réponses

| Valeur des drapeaux SVF | | Somme logique des résultats de corrélation | Drapeaux de Garbling | | Impulsions utilisées pour l'élaboration de la référence |
|---|---|---|---|---|---|
| F1 | F2 | BD5 + BD6 + BD7 | BD1 | BD2 | |
| 0 | 1 | 0 | X | X | F1 |
| 1 | 0 | 0 | X | X | F2 |
| 1 | 1 | 0 | X | X | NRF= 1 → aucune référence n'est établie |
| 0 | 0 | 0 | X | X | F1 et F2 |
| 0 | 0 | 1 | 0 | 0 | F1 |
| | | | 1 | 0 | F1 |
| | | | 0 | 1 | F2 |
| | | | 1 | 1 | Réponse fantôme → la réponse sera éliminée ultérieurement |

X= Quel que soit

# FIG.5

EP 0 577 479 B1

EP 0 577 479 B1

300

301 Analyse Pente

302 Mémoire circulaire

100 CAN  LOG Σ

Δ/Σ état stable

310 Analyse de forme

200 CAN

303 Δ/Σ

LE

PLE

Δ/Σ

Q Σ

305 Elimination pulses ≤ 300 ns

306 Génération front montant

307 Génération front montant  XLE

250 CAN

251

PLES

308 Génération front montant S

309 Génération front montant S  XLES

PLES
XLES
XLE
CLZ
PGF
LES
PLE
LE

message d'échantillon

Fréq. Σ

304 Mémoire circulaire

LOG/Σ
Δ/Σ
Fréq. Σ
Q Σ

# FIG. 6

# FIG.7

message d'impulsion

FIG. 8

FIG.9

EP 0 577 479 B1